# EUROPEAN PATENT SPECIFICATION

(11) **EP 3 883 212 B1**
(45) Date of publication and mention of the grant of the patent: **22.02.2023**
(21) Application number: 19952512.2
(22) Date of filing: 12.11.2019
(51) Int. Cl.: H04L 67/00, H04L 67/12, H04L 41/082, H04L 41/0859, H04L 9/40, H04L 9/06, H04L 9/08, H04L 9/32, H04W 4/50, H04W 12/03, H04W 12/043, H04W 12/30, H04W 4/40

(54) **DEVICE UPGRADE METHOD AND RELATED DEVICE**
UPGRADE-VERFAHREN FÜR VORRICHTUNG UND ZUGEHÖRIGE VORRICHTUNG
PROCÉDÉ DE MISE À NIVEAU DE DISPOSITIF ET DISPOSITIF ASSOCIÉ

(43) Date of publication of application: 22.09.2021
(73) Proprietor: Huawei Technologies Co., Ltd., Longgang District Shenzhen, Guangdong 518129 (CN)
(72) Inventor: LIN, Hsiao-Ying, Vista Dr. 138589 (SG); CONTI, Mauro, 05026 (IT); GHOSAL, Amrita, Durgapur, West Bengal 713212 (IN); HALDER, Subir, Murshidabad, West Bengal 742102 (IN)
(74) Representative: Isarpatent
(86) International application number: PCT/CN2019/117399
(87) International publication number: WO 2021/092745

(56) References cited:
- CN-A- 102 833 745
- CN-A- 105 933 150
- CN-A- 107 239 302
- CN-A- 108 182 080
- CN-A- 108 566 381
- CN-A- 109 542 487
- US-A1- 2007 028 120
- US-A1- 2018 217 828
- Anonymous: "Attribute-based encryption - Wikipedia", , 19 October 2019 (2019-10-19), pages 1-4, XP055863957, Retrieved from the Internet: URL:https://en.wikipedia.org/w/index.php?t itle=Attribute-based_encryption&oldid=9220 04547 [retrieved on 2021-11-22]

## Description

### TECHNICAL FIELD

This disclosure relates to the field of device update technologies, and the invention in particular relates to device update methods and related apparatuses.

### BACKGROUND

In remote online update, a device (for example, a computer or a mobile phone) downloads an update file from a server to update an operating system, software, and the like to a latest status when the device is connected to a network. In this way, the device can be updated automatically without much manual intervention. A cost is low and update efficiency is high.

For example, the updated device is a vehicle-mounted device. In the future, each vehicle is a network node in the internet of vehicles, and is essentially the same as a networked device, for example, a computer or a mobile phone. It is estimated that 60% to 70% of vehicle recalls in North America are due to firmware/software issues. Therefore, updating firmware/software of vehicle-mounted devices is essential. Traditionally, firmware/software of a to-be-updated vehicle-mounted unit is updated in a vehicle recall manner, and this manner has disadvantages of high cost and long cycle.

Therefore, in the future, a vehicle-mounted device is updated in a more flexible remote online update manner, for example, over-the-air (Over-The-Air, OTA), as a current computer and a current mobile phone are remotely updated over a network. Remote update for firmware/software of a vehicle-mounted device may bring many benefits. For example, remote update for the firmware/software of the vehicle-mounted device helps quickly fix critical bugs of the firmware/software, improves vehicle security, and helps add a new function or a new feature in a timely manner to the vehicle throughout a service life. Therefore, the firmware/software can be updated in the OTA manner without a vehicle recall. This greatly reduces substantial costs for a vehicle manufacturer or a vehicle seller and brings convenience to a vehicle user.

However, in a remote update process of the vehicle-mounted device, there may be some potential security hazards. For example, when an update file source is unreliable, an update file version or update file content does not match a version or content of the vehicle-mounted device, or the vehicle-mounted device does not meet an update condition, an update failure or exception of the vehicle-mounted device may be caused, and finally driving security of a user is threatened. Therefore, how to ensure secure and efficient update for firmware/software of related devices including the vehicle-mounted device becomes a problem that urgently needs to be resolved.

US20180217828A1 discloses a system for providing encrypted software updates including a first signature by an update server to a vehicle. The update server receives requests for available software updates from the vehicle. The requests may include the vehicle information allowing the update server to query the data store for the software updates associated with the vehicle as it is currently configured. The update server may provide, responsive to the requests, indications of the available software updates.

US20070028120A1 discloses a method for upgrading software on a portable electronic device, wherein the portable electronic device sends the device information to a host device, and the portable electronic device receives an encrypted software module selected based on the device information by the portable electronic device; the portable electronic device decrypts the encrypted software module and installs the software module on the portable electronic device after the decrypting and the authenticating have been successfully completed.

The Wikipedia for attribute-based encryption in URL: https://en.wikipedia.org/w/index.php?title=Attribute-based encryption&oldid=922004547 discloses an introduction for Attribute-based encryption.

### SUMMARY

The object of the present invention is to provide device update methods and related apparatuses, to resolve a technical problem that firmware/software of an updated device cannot be updated securely and efficiently. This object is solved by the attached independent claims and further embodiments and improvements of the invention are listed in the attached dependent claims. Hereinafter, up to the "brief description of the drawings", expressions like "...aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "...aspect according to an example", "the disclosure describes", or "the disclosure" describe technical teaching which relates to the understanding of the invention or its embodiments, which, however, is not claimed as such.

According to a first aspect according to the invention, the present invention provides a device update method, according to independent claim 1. Further embodiments of the method are provided in dependent claims 2-4.

According to a second aspect according to the invention, the present invention provides another device update method, according to independent claim 5. Further embodiments of the method are provided in dependent claims 6 and 7.

According to a third aspect according to the invention, the present invention provides a device update apparatus, according to independent claim 8. Further embodiments of the apparatus are provided in dependent claims 9-11.

According to a fourth aspect according to the invention, the present invention provides a to-be-updated apparatus, according to independent claim 12. Further embodiments of the apparatus are provided in dependent claims 13 and 14.

### BRIEF DESCRIPTION OF DRAWINGS

FIG. 1 is an architectural diagram of an internet of things-based smart home update system according to an embodiment of the present invention;
FIG. 2 is a schematic diagram of a vehicle-mounted device update application scenario according to an embodiment of the present invention;
FIG. 3 is a schematic diagram of another vehicle-mounted device update application scenario according to an embodiment of the present invention;
FIG. 4 is a schematic diagram of a device update system architecture according to an embodiment of the present invention;
FIG. 5 is a schematic diagram of another device update system architecture according to an embodiment of the present invention;
FIG. 6 is a schematic structural diagram of a primary ECU according to an embodiment of the present invention;
FIG. 7 is a schematic structural diagram of a to-be-updated vehicle-mounted unit according to an embodiment of the present invention;
FIG. 8 is a schematic structural diagram of a terminal device according to an embodiment of the present invention;
FIG. 9 is a schematic flowchart of a device update method according to an embodiment of the present invention;
FIG. 10A and FIG. 10B are a schematic flowchart of another device update method according to an embodiment of the present invention;
FIG. 11A and FIG. 11B are a schematic flowchart of still another device update method according to an embodiment of the present invention;
FIG. 12 is a schematic diagram of a smart vehicle update scenario according to an embodiment of the present invention;
FIG. 13 is a schematic diagram of another smart vehicle update scenario according to an embodiment of the present invention;
FIG. 14 is a schematic diagram of still another smart vehicle update scenario according to an embodiment of the present invention;
FIG. 15 is a schematic diagram of yet another smart vehicle update scenario according to an embodiment of the present invention;
FIG. 16 is a schematic diagram of still yet another smart vehicle update scenario according to an embodiment of the present invention;
FIG. 17 is a schematic diagram of a further smart vehicle update scenario according to an embodiment of the present invention;
FIG. 18 is a schematic structural diagram of a device update apparatus according to an embodiment of the present invention;
FIG. 19 is a schematic structural diagram of still another device update apparatus according to an embodiment of the present invention;
FIG. 20 is a schematic structural diagram of a to-be-updated apparatus according to an embodiment of the present invention;
FIG. 21 is a schematic structural diagram of another device update apparatus according to an embodiment of the present invention; and
FIG. 22 is a schematic structural diagram of a device according to an embodiment of the present invention.

### DESCRIPTION OF EMBODIMENTS

The following describes embodiments of the present invention with reference to accompanying drawings in the embodiments of the present invention.

In the specification, claims, and the accompanying drawings of this application, the terms "first", "second", "third", "fourth" and so on are intended to distinguish different objects but do not indicate a particular sequence. In addition, the terms "including", "having", or any other variant thereof, are intended to cover non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

Mentioning an "embodiment" in the specification means that a particular characteristic, structure, or feature described with reference to the embodiment may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that the embodiments described in the specification may be combined with another embodiment.

The terms such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As shown in figures, both a computing device and an application that runs on a computing device may be components. One or more components may reside within a process and/or an execution thread, and a component may be located on one computer and/or distributed between two or more computers. In addition, these components may be executed from various computer-readable media that store various data structures. For example, the components may communicate by using a local and/or remote process and based on a signal having one or more data packets (for example, data from two components interacting with another component in a local system, a distributed system, and/or across a network such as the internet interacting with another system by using the signal).

Some terms in this application are first described, to help a person skilled in the art have a better understanding.
(1) Over-the-air (Over the Air Technology, OTA) is a technology of remote update of firmware or software through an air interface of mobile communications.
(2) Telematics (Telematics) is a compound word of telecommunications (Telecommunications) and informatics (Informatics), and may be literally defined as a service system that provides information by using a computer system, a wireless communications technology, a satellite navigation apparatus, and an internet technology for exchanging information such as a text and voice, where the computer system, the wireless communications technology, the satellite navigation apparatus, and the internet technology are built in a transporting vehicle, for example, a vehicle, an aircraft, a vessel, or a train. In brief, a vehicle is connected to the internet over a wireless network, to provide a vehicle user with various information necessary for driving or life. A telematics box is referred to as a vehicle-mounted TBox for short. The TBox is a main external communications component of a vehicle. During vehicle update, an update package may be obtained by interacting with a server by using the telematics box.
(3) An electronic control unit (Electronic Control Unit, ECU) is a vehicle-specific microcomputer controller from a perspective of usage. Like a common computer, the electronic control unit includes large-scale integrated circuits such as a microprocessor (CPU), a memory (ROM or RAM), an input/output (I/O) interface, an analog-to-digital (A/D) converter, a shaper, and a drive.
(4) A vehicle control unit (Vehicle Control Unit, VCU) may also be referred to as a vehicle control unit of an electric vehicle.

The VCU is a powertrain controller of a power system of the electric vehicle, is responsible for coordinating operation of various components such as an engine, a drive motor, a gearbox, and a power battery, and has functions of improving power performance, security performance, and economic performance of a vehicle. The VCU is a core component of a vehicle control system of the electric vehicle, and is a core control device configured to control start, operation, advance and retreat, speed, and stop of a motor of the electric vehicle and control another electronic device of the electric vehicle. As a core component of a control system of a pure electric vehicle, the VCU is responsible for data exchange, security management, driver intention interpretation, and power stream management. The VCU collects a motor control system signal, an accelerator pedal signal, a brake pedal signal, and a signal of another component, comprehensively analyzes a driving intention of a driver and perform determining as a response, and monitors actions of controllers of lower-layer components. The VCU plays a critical role in functions such as normal driving of a vehicle, battery power braking and regeneration, network management, fault diagnosis and processing, and vehicle status monitoring.

(5) A controller area network (Controller Area Network, CAN) bus is one of the most widely applied field buses in the world. High reliability and a sound error detection capability of the CAN bus receive much attention, and therefore the CAN bus is widely applied to a vehicle computer control system and an industry environment with a hash ambient temperature, strong electromagnetic radiation, and intense vibration. The CAN bus is a widely applied field bus and has a great application prospect in industry detection and control, industrial automation, and other fields. A CAN is a serial communications bus network, and has advantages of reliability, real time, and flexibility in data communication.

(6) A message authentication code (Message Authentication Code, MAC) is an authentication mechanism used by both communications entities, and is a tool for ensuring data integrity of a message. The MAC is similar to a digest algorithm, but a key is further used for computation of the MAC. Therefore, the MAC is a value obtained based on a key and a message digest. Actually, the MAC generates redundant information for a message, and is used for data source authentication and integrity check.

(7) Public key password (asymmetrical password): A public key password is also referred to as an asymmetrical password. An asymmetrical key algorithm means that an encryption key and a decryption key of an encryption algorithm are different, or one key cannot be derived from the other key. A user who has a public key password has an encryption key and a decryption key. The decryption key cannot be obtained by using the encryption key. In addition, the encryption key is public. The public key password is designed based on this principle, to use assistance information (trapdoor information) as a privacy key. Security strength of this password depends on computation complexity of a problem on which the password is based. Currently, common public key passwords include an RSA public key password, an ElGamal public key password, and an elliptic curve password.

(8) Symmetric password: Symmetric key encryption is also referred to as private key encryption. To be specific, a data sender and a data receiver necessarily use a same key to perform encryption operation and decryption operation on a plaintext. In other words, an encryption key can be deduced from a decryption key, and a decryption key can be deduced from an encryption key. In most symmetric algorithms, an encryption key is the same as a decryption key. These algorithms are also referred to as privacy key algorithms or single key algorithms, and require a sender and a receiver to agree on a key before secure communication. Security of a symmetric algorithm depends on a key. If the key is leaked, anyone can encrypt or decrypt a message. The key needs to keep confidential provided that communication requires confidentiality.

It can be learned from the description of the symmetric key algorithm and the description of the asymmetric key algorithm that a same key is used for symmetric key encryption and decryption, or a decryption key can be easily deduced from an encryption key. The symmetric key algorithm has features such as simple encryption processing, fast encryption and decryption speed, a short key length, and a long development history. The asymmetric key algorithm has features such as slow encryption and decryption speed, a long key length, and a relatively short development history.

(9) Cryptographic hash function (Cryptographic hash function), also translated as cryptographic hash function, is a kind of hash function. The cryptographic hash function is considered a one-way function, meaning that it is extremely difficult to derive input data from a result output by the hash function. Such a one-way function is referred to as the "workhorse of modern cryptology". The input data of this hash function is usually referred to as a message (message), and the output result of the hash function is often referred to as a message digest (message digest) or a digest (digest). In information security, many important applications such as digital signature and message authentication code are implemented by using the cryptographic hash function.

(10) A terminal device may be user equipment (User Equipment, UE), a station (STATION, ST) in a wireless local area network (Wireless Local Area Networks, WLAN), a cellular phone, a wireless local loop (Wireless Local Loop, WLL) station, a personal digital assistant (Personal Digital Assistant, PDA) device, a handheld device or a computing device having a wireless communication function, another processing device or a wearable device connected to a wireless modem, or the like.

(11) An original equipment manufacturer (Original Equipment Manufacturer, OEM) refers to that an entrusted manufacturer produces products according to a requirement and authorization of a sample manufacturer and a specific condition of the manufacturer. All design drawings are manufactured and processed according to design of the sample manufacturer. The OEM in this application may be an original manufacturer of a to-be-updated device. For example, if the to-be-updated device is a smart vehicle, the OEM is a vehicle manufacturer.

(12) On-board diagnostics (On-Board Diagnostics, OBD) is a detection system extended from vehicle fault diagnosis. The OBD can monitor working conditions of an electronic control system of an engine and another functional module of a vehicle in real time during running of the vehicle. If it is found that the working condition is abnormal, the OBD determines a specific fault according to a specific algorithm, and stores the fault in a memory of the system in a form of diagnostic trouble code (Diagnostic Trouble Codes, DTC). Useful information obtained by the system from diagnosis can assist in vehicle repair and maintenance. Maintenance personnel may read the trouble code based on a dedicated instrument of a vehicle original manufacturer to quickly locate the fault. This facilitates vehicle repair and reduces manual diagnosis time.

First, to facilitate understanding of the embodiments of the present invention, a technical problem to be specifically resolved in this application is further analyzed and proposed. In the prior art, a secure remote update (remote update of a vehicle is used as an example) technology of a device includes a plurality of technical solutions. The following lists four common solutions as examples.

Solution 1: An update package of the vehicle includes a signature of an issuing organization (for example, the signature is performed by using a pre-negotiated private key) after being developed. After obtaining the update package by using an in-vehicle electronic control unit ECU (which may also be referred to as an in-vehicle controller), the vehicle performs authentication by using a pre-negotiated public key. A procedure of the authentication authenticates that a source of the update package is trusted. To be specific, it can be authenticated that the update package is released by an authorized issuing organization.

Disadvantages of the solution 1: It is authenticated that only the source of the update package is trusted. However, an identity and a status of the vehicle are not authenticated (consequently, a vehicle that does not meet a condition may download an inappropriate update package, resulting in an update failure), and does not provide confidentiality protection during remote transmission of the update package

Solution 2: A white-box is used to encrypt an update package of the vehicle to achieve confidentiality, a hash algorithm is used to ensure integrity of the update package, and a signature system is used to ensure reliability of a source.

Disadvantage of the solution 2: The solution ensures confidentiality, integrity, and source reliability of the update package, but does not authenticate an identity and a status of the vehicle.

Solution 3: A prerequisite detection before vehicle update is proposed, including an identity and a status of the vehicle. For example, it is proposed to compare software versions. If a version on a vehicle-mounted controller is relatively old, an update package may be downloaded. For another example, software update management proposes detection on a relatively large quantity of prerequisites, and a prerequisite required for downloading an update package may be different from a prerequisite required for installing the update package.

Disadvantage of the solution 3: A mandatory condition detection manner is not provided. To be specific, the detection manner is not highly mandatory and is easily bypassed.

Solution 4: A password tool is used to provide highly mandatory prerequisite detection. For example, an encryption algorithm is used to provide confidentiality of an update package, a signature is used to provide trusted source authentication, and a Hash value of the update package is calculated to provide integrity check.

Disadvantage of the solution 4: A universal cryptographic algorithm can detect only few types of conditions. For example, when a public key encryption algorithm is used, a public key pair exists, and a detected condition is whether a key exists. This cannot resolve a combination state of a plurality of update conditions.

In conclusion, in the foregoing four solutions, the identity and the status of the vehicle are not detected. Alternatively, even if there is related detection, the detection is not mandatory and can be easily bypassed. Alternatively, even if mandatory detection is provided, because a detection manner is based on the universal cryptographic algorithm and a quantity of types of detected conditions that can be provided is small and inflexible, an actual requirement in a vehicle update process cannot be met.

Therefore, to resolve the foregoing technical problem in a current secure remote update technology that an actual service requirement is not met, the technical problem to be actually resolved in this application includes the following aspect: When a vehicle performs secure remote update, how to implement an update solution that is mandatory and can meet detection on a plurality of prerequisites. Further, especially on the premise of ensuring confidentiality and integrity of an update package, mandatory prerequisite detection on an identity and a status of the vehicle needs to be provided.

To facilitate understanding of the embodiments of the present invention, the following lists, as examples, scenarios of a device update system to which a device update method in this application is applied. The following three scenarios may be included.

Scenario 1: A smart home is updated and managed by using a server.

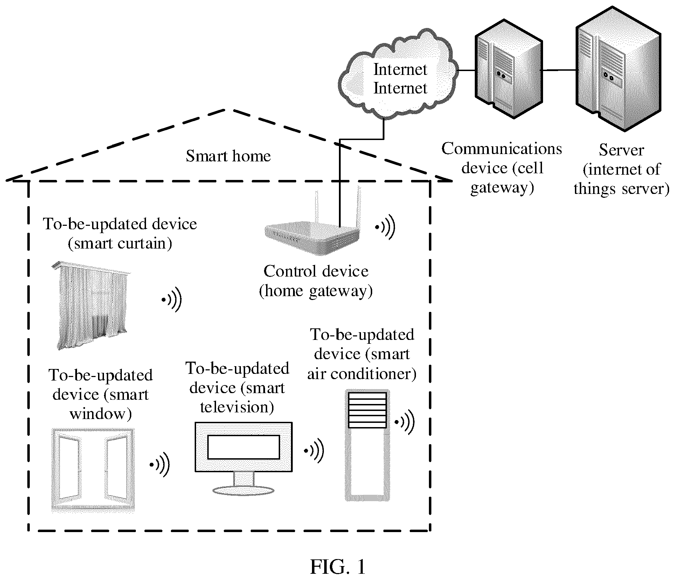

FIG. 1 is an architectural diagram of an internet of things-based smart home update system according to an embodiment of the present invention. The application scenario includes a server (an internet of things server is used as an example in FIG. 1), a communications device (a cell gateway is used as an example in FIG. 1), a control device (a home gateway is used as an example in FIG. 1), and a plurality of to-be-updated devices (a smart curtain, a smart window, a smart television, and a smart air conditioner are used as examples in FIG. 1). The smart curtain, the smart window, the smart television, and the smart air conditioner may communicate with the home gateway in a wireless communication manner, for example, Bluetooth, NFC, Wi-Fi, or a mobile network. The home gateway is connected to the cell gateway and the internet of things server over the internet. When any one of the plurality of to-be-updated smart home devices has an update requirement, the smart home device may initiate a request to the internet of things server by sending the update request including an attribute set of the smart home device. For example, after the smart air conditioner sends, to the internet of things server by using the home gateway and the cell gateway, an update request that carries a model, a firmware version, and a software version of the smart air conditioner, the internet of things server generates, based on the model, the firmware version, and the software version of the smart air conditioner, an access policy that matches the air conditioner. Then, an update package is encrypted based on attribute-based encryption according to the access policy and an agreed public key to obtain a ciphertext of the update package. Then, the ciphertext is sent to the air conditioner by using the cell gateway and the home gateway for update. Attribute encryption processing is performed on the ciphertext of the update package based on the attribute set of the smart air conditioner. Therefore, only a smart air conditioner that has an attribute key corresponding to the attribute set can correctly decrypt the update package. In addition, further, the update package may be matched based on a feature of the attribute set. Therefore, it can be ensured that the smart air conditioner can precisely download an update package that meets a requirement of the smart air conditioner and perform update.

Scenario 2: One-to-many update management is performed on smart vehicles by using a server, and an update request of a to-be-updated device is initiated by the to-be-updated device to the server.

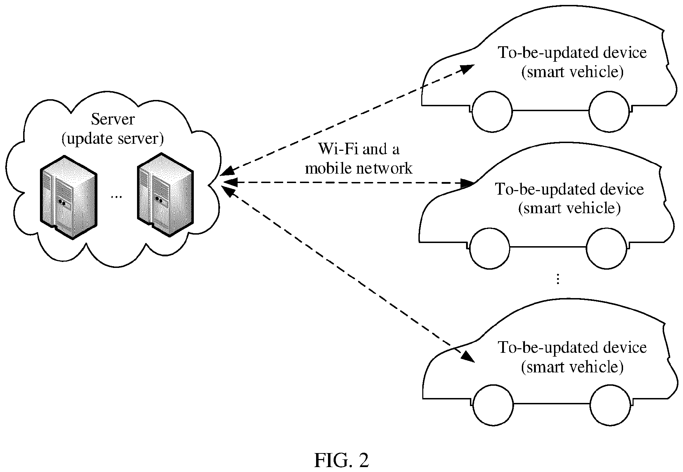

FIG. 2 is a schematic diagram of a vehicle-mounted device update application scenario according to an embodiment of the present invention. The application scenario includes a server (for example, an update server) and a plurality of to-be-updated devices (for example, smart vehicles). The update server may communicate with the smart vehicles by using Wi-Fi, a mobile network, and the like. The update server may perform update management on a plurality of legally registered smart vehicles, and complete related services, for example, provide, download, and update an update package. When any one of the plurality of to-be-updated smart vehicles has an update requirement, the smart vehicle may initiate a request to the update server by sending the update request including an attribute set of the smart vehicle. For example, after the smart vehicle sends, to the server, an update request that carries a vehicle identification number, an engine number, a vehicle model serial number, and a hardware version number and a software version number of a vehicle component of the smart vehicle, the server generates, based on the vehicle identification number, the engine number, the vehicle model serial number, and the hardware version number and the software version number of the vehicle component of the smart vehicle, an access policy that matches the smart vehicle. Then, an update package is encrypted based on attribute-based encryption according to the access policy and an agreed public key, to obtain a ciphertext of the update package. Then, the ciphertext is sent to the smart vehicle for update. Attribute encryption processing is performed on the ciphertext of the update package based on the attribute set of the smart vehicle. Therefore, only a smart vehicle that has an attribute key corresponding to the attribute set can correctly decrypt the update package. In addition, further, the update package may be matched based on a feature of the attribute set. Therefore, it can be ensured that the smart vehicle can precisely download an update package that meets a requirement of the smart vehicle and perform update.

In addition to carrying the attribute set of the smart vehicle when the smart vehicle initiates the update request to the server, the smart vehicle may further add a logical function entity based on, for example, the update server. The logical function entity is configured to store a first key and perform first security processing, to perform security hardening on storage or transmission of an update file in the vehicle, so as to ensure security of vehicle update.

Scenario 3: One-to-one management is performed on a smart vehicle by using a terminal device, and an update request of a to-be-updated device is initiated by a matched terminal device to a server.

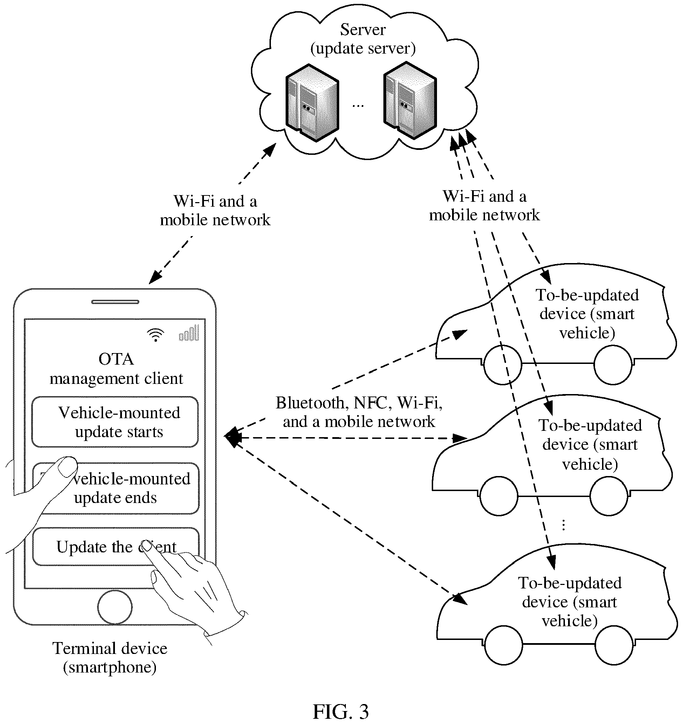

FIG. 3 is a schematic diagram of another vehicle-mounted device update application scenario according to an embodiment of the present invention. The application scenario includes a terminal device (for example, a smartphone), a to-be-updated device (for example, a smart vehicle), and a server (for example, an update server). The smartphone may communicate with the smart vehicle by using Bluetooth, NFC, Wi-Fi, a mobile network, and the like. The update server may communicate with the terminal device by using the Wi-Fi, the mobile network, and the like. A one-to-one matching relationship may be established between the smartphone and the smart vehicle. For example, a license plate or a unique identifier of the smart vehicle is matched with an identity card or an authorized account of the terminal device. After matching is completed, the smartphone and the smart vehicle may cooperatively perform a procedure of initiating an update request in this application, so that a user can perform update management on the driven vehicle by using the smartphone, thereby ensuring update security of the vehicle. In another possible implementation, a one-to-many matching relationship may be established between the smartphone and the smart vehicles. For example, one user may own and manage a plurality of vehicles at the same time, or one user may manage vehicles of a plurality of different users. For example, an employee in a 4S shop uses a dedicated terminal device to update systems of all vehicles of a same model in the shop, or a user uses a terminal device of the user to provide or manage update packages for nearby smart vehicles that have a matching relationship with the terminal device of the user, to implement an application scenario in which one device manages a plurality of smart vehicles at the same time. This reduces time, network transmission bandwidth, and storage resources, and ensures update security of the vehicles. It may be understood that, in one-to-many management, the terminal device needs to pre-store related information of the plurality of vehicles, or the plurality of vehicles prove, to the terminal device, authorization of the plurality of vehicles and a service relationship between the plurality of vehicles and the terminal device. In the two implementations in the scenario 3, for example, after the smartphone sends, to the server, an update request that carries an attribute set including a phone number and an identification code of the smartphone, and an identity, an engine number, a vehicle model serial number, a hardware version number and a software version number of a vehicle component of the smart vehicle, the server generates, based on the attribute set, an access policy that matches the smartphone and the smart vehicle. Then, an update package is encrypted based on attribute-based encryption according to the access policy and an agreed public key, to obtain a ciphertext of the update package. Then, the ciphertext is sent to the smartphone or the smart vehicle for update. Attribute encryption processing is performed on the ciphertext of the update package based on the attribute set of the smartphone and the attribute set of the smart vehicle. Therefore, only a smartphone or a smart vehicle that has an attribute key corresponding to the attribute set can correctly decrypt the update package. To be specific, a device is updated by using an authorized smartphone to assist a smart vehicle that matches the smartphone. In addition, further, the update package may be matched based on a feature of the attribute set. Therefore, it can be ensured that the smart vehicle can precisely download an update package that meets a requirement of the smart vehicle and perform update.

It may be understood that the application scenarios in FIG. 1, FIG. 2, and FIG. 3 are merely several example implementations in the embodiments of the present invention, and the application scenarios in the embodiments of the present invention include but are not limited to the foregoing application scenarios. The device update method in this application may be further applied to scenarios such as a scenario in which a server manages batch update of systems of smartphones of different models, a scenario in which a smartphone manages a smart wearable device to perform device update, a scenario in which a smart medical server manages a smart medical instrument to perform device update, and a scenario in which a factory management and control server manages device update of smart machines. Other scenarios and examples are not listed and described one by one.

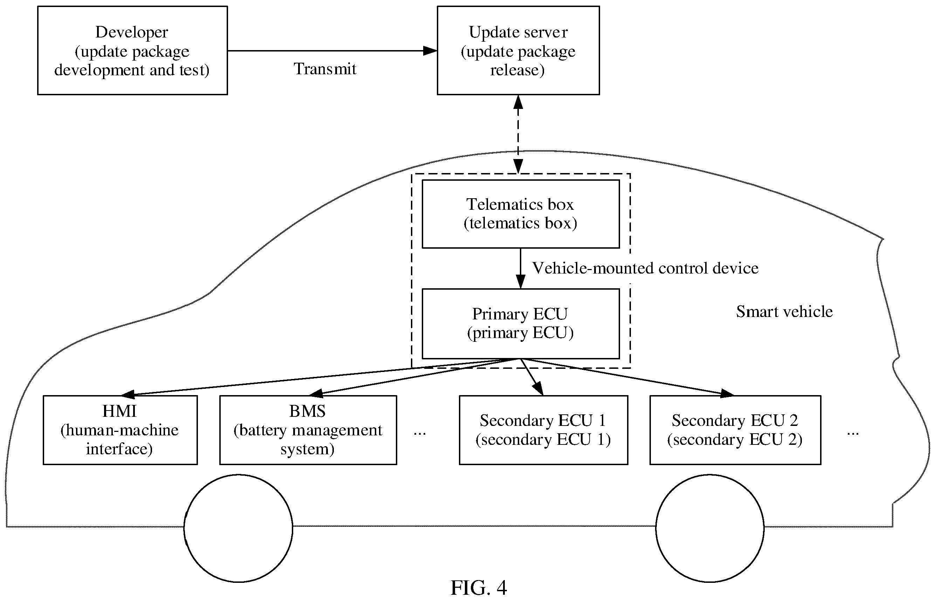

With reference to the foregoing application scenarios, the following first describes a device update system architecture on which the embodiments of the present invention are based. FIG. 4 is a schematic diagram of a device update system architecture (an architecture 1 for short) according to an embodiment of the present invention, and corresponds to the foregoing scenario 2. The device update method provided in this application may be applied to the system architecture. The system architecture includes an update server and a smart vehicle. The smart vehicle includes a vehicle-mounted control device and one or more to-be-updated vehicle-mounted units. The vehicle-mounted control device may include a telematics box (Telematics box, TBox) and a primary electronic control unit (Primary Electronic Control Unit, ECU) configured to manage and assist in an update process of a plurality of to-be-updated vehicle-mounted units. The one or more to-be-updated vehicle-mounted units may include a human-machine interface (Human Machine Interface, HMI), a battery management system (Battery Manage System, BMS), a secondary ECU 1 (Secondary ECU 1), a secondary ECU 2 (Secondary ECU 2), and the like that are shown in FIG. 4. Optionally, the one or more to-be-updated vehicle-mounted units may further include in-vehicle components such as on-board diagnostics II (the Second On-Board Diagnostics, OBD-II), an advanced driver assistance system main controller (Advanced Driving Assistant System Main Controller, ADAS Main Controller), a vehicle controller unit (Vehicle Controller Unit, VCU), and a body controller (Body Controller) that are not shown in FIG. 4. Optionally, the in-vehicle components may be connected through various in-vehicle buses. In the foregoing system architecture, remote update of the smart device may include the following basic processes: update package release, update package obtaining, update package transmission, update, and confirmation, and the like.

The update server may be configured to obtain an unencrypted vehicle-mounted update package from a developer. The vehicle-mounted update package may include a target update package in this application, and the target update package may be used to update a corresponding to-be-updated vehicle-mounted unit. Optionally, the update server is further configured to generate keys used between the update server and the smart vehicle, including a public key, a master key, a plurality of attribute keys, and the like.

The TBox in the vehicle-mounted control device is responsible for external communication, for example, communication with a terminal device or the update server. When the vehicle performs remote update, the vehicle may interact with the server to obtain a key and an update package, and transmit the key and the update package to the primary electronic control unit (the primary ECU).

The primary electronic control unit (the primary ECU) in the vehicle-mounted control device is responsible for communicating with the plurality of to-be-updated vehicle-mounted units in the smart vehicle, and a main function of the primary ECU is to manage and assist in the update process of the to-be-updated vehicle-mounted unit. Specifically, the primary ECU may have the following functions: key obtaining and management, for example, obtaining, by the TBox, a public key and an attribute key (optionally, obtaining a master key and generating an attribute key) from the server, and storing the public key and the attribute key; and update package obtaining and decryption, for example, obtaining, by the TBox, a ciphertext of the target update package from the server, decrypting the received ciphertext of the target update package based on an attribute key stored in the TBox, and finally sending the decrypted target update package to a corresponding to-be-updated vehicle-mounted unit for update. Optionally, the primary ECU is a logical entity, and may be physically deployed on any powerful unit or module, for example, the TBox, a gateway, or the VCU.

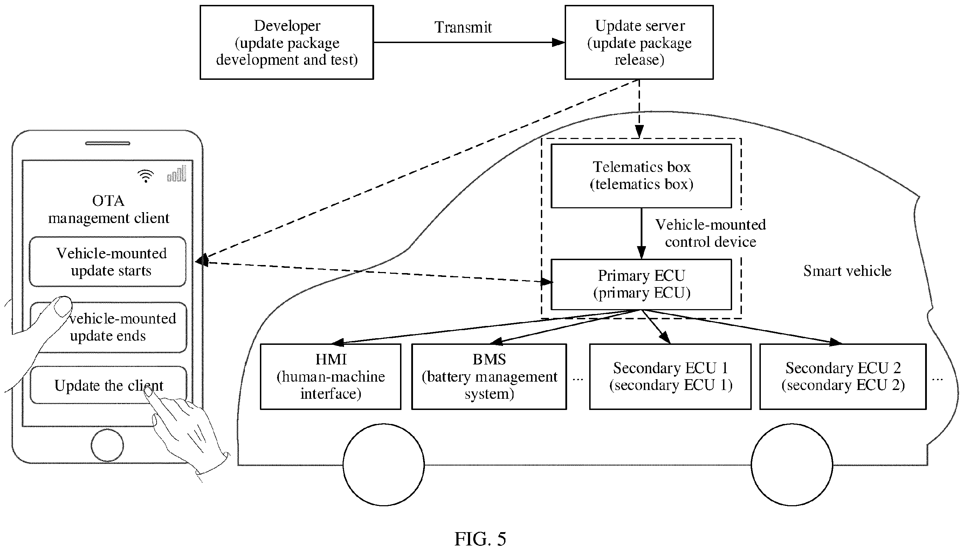

FIG. 5 is a schematic diagram of another device update system architecture (an architecture 2 for short) according to an embodiment of the present invention, and corresponds to the foregoing scenario 3. The system architecture further includes a terminal device.

The terminal device may communicate with an update server or a smart vehicle, may be responsible for sending an update request, and may participate, based on a storage capability and a computing capability of the terminal device, in processes such as storage of a public key and an attribute key or storage of a master key, calculation of an attribute key, and obtaining and security processing of a ciphertext of a target update package, to implement computing expansion and security hardening. Further, the terminal device is further configured to participate in a secure update process of the smart vehicle from perspectives such as resource extension and update control. For example, the terminal device assists, based on the storage capability of the terminal device, in storing an attribute set (for example, software/firmware information, a current version, a size, and a developer of each to-be-updated vehicle-mounted unit), a backup file (for example, a software/firmware rollback version of the to-be-updated vehicle-mounted unit), and an in-vehicle system status, to complete storage extension. In addition, the terminal device may further be used as a remote control console end for software/firmware update (a user may choose whether to perform update, update time, a single-point update mode, a group update mode, or the like), to implement remote control of update by the user.

Based on the foregoing descriptions of the architecture 1 and the architecture 2 provided in the embodiments of the present invention, structures of the modules or the devices in the foregoing architectures are further described.

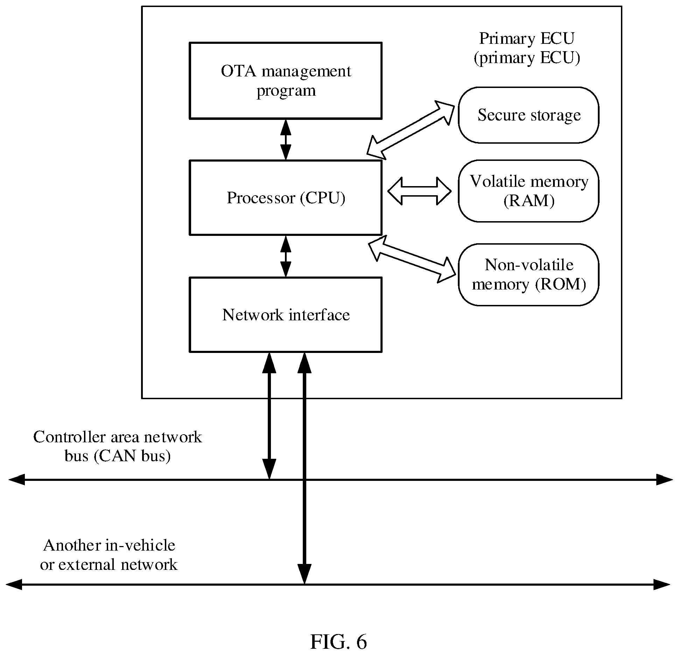

The structure of the primary ECU may be shown in FIG. 6. FIG. 6 is a schematic structural diagram of a primary ECU according to an embodiment of the present invention. The primary ECU may include a processor CPU, a related volatile memory RAM, and a related non-volatile memory ROM. The primary ECU is configured for secure storage of keys such as a public key and one or more attribute keys that are obtained from a server, or a master key. The primary ECU may further include a memory configured to store an OTA management program for remote update, where the OTA management program is used to manage an update process. The primary ECU may further include a network interface configured to communicate with another vehicle-mounted device through a CAN bus or another in-vehicle network. It may be understood that, if the primary ECU is implemented on the TBox, the primary ECU further requires a network interface to communicate with an external network. To be specific, the primary ECU needs to have a relatively strong computation capability and a relatively large quantity of resources, to assist a vehicle-mounted device in completing remote update and to be trusted by another vehicle-mounted device. In terms of logical architecture division, the primary ECU divides the architecture into an out-of-vehicle communication part and an in-vehicle communication part. Devices in a vehicle only need to perform an operation related to a symmetric password rather than an operation related to a public key password. If there is an operation related to a public key password, the primary ECU performs the operation, to reduce a computation amount and computation complexity for the to-be-updated vehicle-mounted unit.

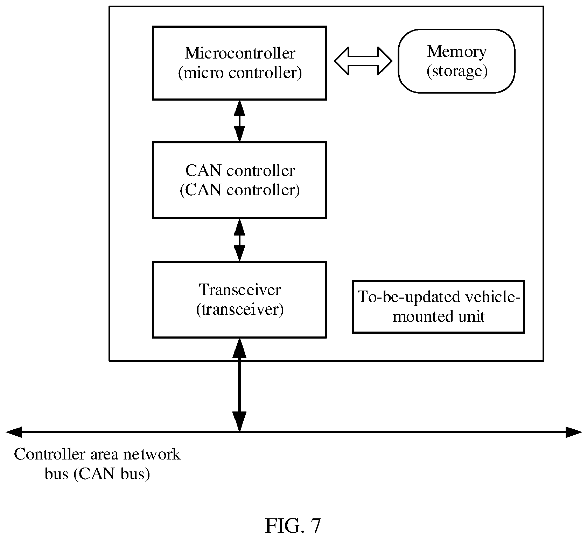

Composition of any to-be-updated vehicle-mounted unit in the smart vehicle may be shown in FIG. 7. FIG. 7 is a schematic structural diagram of a to-be-updated vehicle-mounted unit according to an embodiment of the present invention. The to-be-updated vehicle-mounted unit may include a microcontroller (Micro controller), a CAN controller (CAN controller), and a transceiver (Transceiver). The to-be-updated vehicle-mounted unit communicates with an in-vehicle network, for example, a CAN bus, through the transceiver. The CAN controller is configured to implement a CAN protocol, and the microcontroller is configured to implement related to-be-updated and updated computing processing. With reference to the foregoing schematic structural diagram, in this application, the to-be-updated vehicle-mounted unit receives, based on the in-vehicle network such as the CAN bus through the transceiver (Transceiver), a decrypted target update package sent by a vehicle-mounted control device, and performs secure update through the microcontroller (Micro Controller).

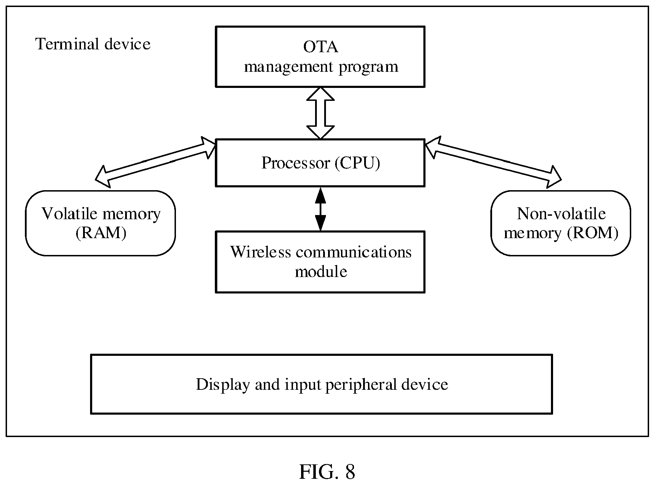

For composition of the terminal device, refer to FIG. 8. FIG. 8 is a schematic structural diagram of a terminal device according to an embodiment of the present invention. The terminal device may include a processor CPU, a related volatile memory RAM, and a related non-volatile memory ROM. The ROM may be configured to store an OTA management program, attribute information, an attribute key, and the like. The OTA management program may be used to manage a device update process. A wireless communications module may be configured to communicate with other devices (including a smart vehicle, an update server, and the like). A display and input peripheral device is configured to provide display and input of a vehicle-mounted update interaction control interface for a user, for example, an audio input/output module, a key or touch input module, and a display.

Optionally, the architecture 1 or the architecture 2 may further include a developer. After developing and testing a vehicle-mounted update package of firmware/software, the developer delivers the vehicle-mounted update package to the update server. The delivered vehicle-mounted update package needs to be digitally signed. Optionally, before being digitally signed, the delivered vehicle-mounted update package may be further encrypted. If encryption is performed, the system architecture may further include a key server, configured to provide a key used for transmission between the developer and the update server. It may be understood that the device update system architectures in FIG. 4 and FIG. 5 are merely two examples of implementations in the embodiments of the present invention, and the device update system architectures in the embodiments of the present invention include but are not limited to the foregoing device update system architectures.

With reference to the foregoing application scenarios, the system architectures, and the device update method provided in this application, the following specifically analyzes and resolves the technical problem proposed in this application by using an example in which the to-be-updated device is a smart vehicle/in-vehicle system.

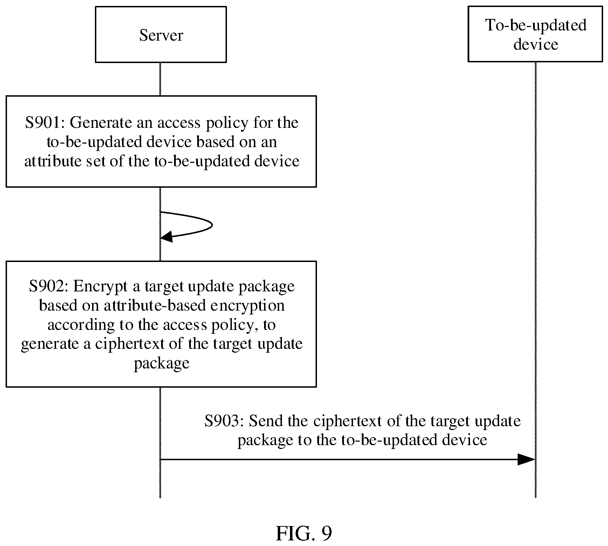

FIG. 9 is a schematic flowchart of a device update method according to an embodiment of the present invention. The device update method may be applied to the system architecture 1 or the system architecture 2, and is applicable to any one of the foregoing application scenarios in FIG. 1, FIG. 2, or FIG. 3. The following provides description from a perspective of interaction between a server and a to-be-updated device with reference to FIG. 9. The method may include the following step S901 to step S903.

Step S901: The server generates an access policy for the to-be-updated device according to an attribute set of the to-be-updated device.

Specifically, a smart vehicle/in-vehicle system update scenario is mainly used as an example for description below. To be specific, the to-be-updated device may be a smart vehicle/in-vehicle system, and the server may be an update server of an original equipment manufacturer OEM (namely, a vehicle factory). In this embodiment of the present invention, each to-be-updated device has an attribute set (the attribute set is a non-empty set) that reflects an identity and a status of the to-be-updated device, and a key set corresponding to the attribute set. The attribute set may include one or more pieces of attribute information of the to-be-updated device. The attribute information may be information used to represent the identity or the status of the to-be-updated device. For example, the attribute information includes one or more of a vehicle identification number, an engine number, a license plate number, a vehicle model serial number, and a hardware version number of a vehicle component and a software version number of the vehicle component. The attribute set is used by the server to subsequently process an update package based on the attribute set, to ensure that only a to-be-updated device whose identity and status both meet conditions can obtain a matched update package. This prevents a to-be-updated device that does not meet the conditions from unauthorizedly obtaining the update package, and prevents the to-be-updated device that does not meet the update conditions from downloading or updating the update package incorrectly. This is equivalent to that different to-be-updated devices or each type of to-be-updated devices may have personalized features and update requirements. In this embodiment of the present invention, the server needs to generate the access policy (access control policy) for the to-be-updated device based on the attribute set of the to-be-updated device, and the access policy may also be referred to as an access structure, an access control policy, or the like. To be specific, the access policy defines prerequisites for obtaining a target update package. In other words, the access policy defines a device that has which attribute information can decrypt the target update package, or a device that does not have which attribute information cannot decrypt the target update package. It may be understood that the access policy is set based on the prerequisites of the target update package, and the prerequisites are combined and then a combined prerequisite is converted into the access policy to encrypt the target update package. For example, that the server generates an access policy for the to-be-updated device based on the attribute set specifically includes: The server determines the target update package based on the attribute set. The server determines update conditions corresponding to the target update package; and combines the update conditions and then converts a combined update condition into the access policy. To be specific, the server determines, based on the attribute set in the update request, the target update package that matches the to-be-updated device; defines update prerequisites for the target update package; and combines the update prerequisites, converts a combined update prerequisite, and then determines a converted combined update prerequisite as the access policy. In this way, the target update package may be encrypted subsequently according to the access policy, to implement mandatory detection on update conditions (for example, the identity and the status) of the to-be-updated device.

For example, when the attribute set of the to-be-updated device includes an identity 1234, a vehicle model serial number 12345, an engine number 1234567, a TBox software version number V1, a human-machine interface HMI software version number V3, and a battery management system BMS software version V2 of the smart vehicle, the server determines, by using the identity 1234 that is of the vehicle and that is in the attribute set, that the vehicle is an authorized smart vehicle, and then obtains, based on the vehicle model serial number 12345, a latest software version currently corresponding to a smart vehicle of this model. After comparison, it is found that the latest version currently corresponding to the vehicle model is a TBox software version number V2, the human-machine interface HMI software version number V3, and the battery management system BMS software version V2. Therefore, it is determined that an update package that needs to be updated by the smart vehicle is to update a TBox software version from V1 to V2. Therefore, the access policy generated by the server based on the attribute set may be "the engine number is 1234567 and the TBox software version number is V1". To be specific, that only a smart vehicle whose engine number is 1234567 and TBox software version number is V1 can perform decryption is mandatorily limited. Alternatively, the access policy may be "the vehicle model serial number is 12345 and the TBox software version number is V1". To be specific, that a type of smart vehicles whose vehicle model is 12345 and TBox software version number is V1 all can perform decryption is limited. In conclusion, the access policy generated by the server based on the attribute set of the to-be-updated device may be for the to-be-updated device only, or may be for a type of to-be-updated devices including the to-be-updated device. In addition, a rule of the access policy specifically generated by the server varies with an actual update scenario and an update rule. How to generate a corresponding access policy based on an attribute set is not specifically limited in this embodiment of the present invention.

Optionally, the attribute set may include static attribute information or dynamic attribute information. The static attribute information includes information that does not change with time, such as the identity, the engine number, and a production serial number of the smart vehicle. The dynamic attribute information includes information that may change with time, such as a production serial number of a component of the smart vehicle, an identity of the component, and a hardware version and a software version that are used by the component. For example, when the smart vehicle needs to update a battery management system BMS, the attribute set may include static attribute information (the identity, the vehicle model serial number, a hardware version number of the battery management system BMS) of the smart vehicle, and dynamic attribute information (a software version number of the BMS).

In a possible implementation, before generating the access policy, the server determines the attribute set of the to-be-updated device by obtaining the update request including the attribute set of the to-be-updated device. For example, the update request may be an update request for one or more to-be-updated vehicle-mounted units (for example, a human-machine interface HMI, a battery management system BMS, and an electronic control unit) in a smart vehicle/in-vehicle system. To be specific, the update request of the to-be-updated device may carry the attribute set (including the one or more pieces of attribute information of the device) of the to-be-updated device, so that the server learns of the attribute set of the to-be-updated device. Optionally, the access policy may alternatively be generated by using the attribute set that is of the to-be-updated device and that is pre-stored in the server or the attribute set that is of the to-be-updated device and that is obtained in another manner. To be specific, the attribute set may be sent by the to-be-updated device or another device to the server, or may be pre-stored by the server (for example, big data storage or big data analysis). This is not specifically limited in this embodiment of the present invention.

In a possible implementation, the attribute set includes the one or more pieces of attribute information. Before the server obtains the update request of the to-be-updated device, the method further includes: The server generates a public key and a master key, where the master key is a private key corresponding to the public key. The server generates one or more attribute keys based on the master key and the one or more pieces of attribute information. The server sends the one or more attribute keys to the to-be-updated device for pre-storage. The one or more attribute keys are used by the to-be-updated device to decrypt a ciphertext of the target update package to obtain the target update package. In this embodiment of the present invention, in an initial phase, the server needs to generate the public key, the master key (a private key corresponding to the public key), and the corresponding attribute key that are to be used in a subsequent secure update process of the to-be-updated device, and send the attribute key to a to-be-updated device that has the corresponding attribute information, to ensure a subsequent secure device update process based on ciphertext-policy attribute-based encryption. For example, a server of an original vehicle factory (an OEM) needs to pre-generate, in an early stage, a related key in the attribute-based encryption on which this embodiment of the present invention is based, and distribute the related key to a corresponding to-be-updated device. To be specific, related attribute information and a corresponding attribute key of the to-be-updated device are defined. Specifically, the server of the vehicle factory generates a public key pk_c and a master key mr_c by using a setup algorithm, where the public key pk_c and the master key mr_c are a public-private key pair. Then, pk_c and mr_c are used to generate attribute keys ar_c corresponding to various attribute information of the to-be-updated device. In addition, the attribute key is preset in a corresponding smart vehicle.

In a possible implementation, the server further pre-generates a public key and a master key, where the master key is a private key corresponding to the public key. The server sends the public key and the master key to the to-be-updated device for pre-storage, where the master key may be used by the to-be-updated device to locally generate a corresponding attribute key in the to-be-updated device based on attribute information that meets an update condition in the access policy, to further obtain a corresponding target update package. In this method embodiment, the server sends both the public key and the master key to the to-be-updated device, so that the to-be-updated device locally generates the corresponding attribute key based on the attribute information that meets the update condition in the access policy, to further obtains the corresponding target update package. The method embodiment may be applicable to a case in which the attribute information of the to-be-updated device changes greatly. For example, a smart vehicle is a shared vehicle, and user information or account information corresponding to the shared vehicle frequently changes. Consequently, different attribute keys are usually required to provide device update services for different users.

Optionally, the update request is encrypted by using the public key pk_c. After receiving the update request of the to-be-updated device, the server further decrypts the update request based on the private key corresponding to the public key, namely, the master key mr_c. To be specific, when sending the one or more attribute keys to the to-be-updated device for pre-storage, the server further sends the public key to the to-be-updated device, so that the to-be-updated device encrypts the update request. In this embodiment of the present invention, the update request may further be encrypted by using the public key, so that the server may decrypt the update request by using the master key, to ensure security of update request transmission. In addition, whether there is an available target update package in the to-be-updated device may be further determined based on the decrypted update request, to ensure update accuracy. Further, the server checks the identity and an attribute of the vehicle based on the decrypted update request, and determines whether there is an available target update package (if it is determined that there is no available update package currently, the server may also indicate, to the to-be-updated device, that there is no need to perform update currently). The target update package may be a combination of update files of one or more different to-be-updated vehicle-mounted units in the smart vehicle.

Step S902: The server encrypts the target update package based on the attribute-based encryption according to the access policy, to generate the ciphertext of the target update package.

Specifically, the server inputs the target update package and the access policy in step S902 based on the attribute-based encryption, and optionally further inputs the public key generated by the server, and finally outputs the ciphertext of the target update package. The to-be-updated device can decrypt the ciphertext of the target update package only when the attribute information (reflected by whether the to-be-updated device has the corresponding attribute key) corresponding to the to-be-updated device meets the access policy deployed in the ciphertext of the target update package. The target update package may be a system update file, a system patch, system synchronization information, or the like of any one or more to-be-updated vehicle-mounted units in the smart vehicle, and is used to provide a service such as system update, maintenance, or update for a corresponding to-be-updated vehicle-mounted unit. In this embodiment of the present invention, based on the ciphertext-policy attribute-based encryption (ciphertext policy attribute based encryption, CP-ABE), the access policy is introduced to a public key encryption system, to deploy the access control policy of the target update package. Compared with a conventional public key encryption system (for example, identity-based encryption IBE), in this embodiment of the present invention, the identity of the to-be-updated device is no longer used as unique identification information, but the to-be-updated device is identified based on a plurality of attributes (namely, an attribute set). This enhances descriptiveness and implements a mandatory device update solution that can meet detection on a plurality of prerequisites (to be specific, can flexibly change based on the attribute set in the update request). On the premise of ensuring confidentiality and integrity of the update package, mandatory prerequisite detection on the identity and status of the to-be-updated device can be provided.

Step S903: The server sends the ciphertext of the target update package to the to-be-updated device, where the ciphertext of the target update package is used by the to-be-updated device to perform decryption based on the one or more attribute keys corresponding to the attribute set to obtain the target update package.

Specifically, the server sends the ciphertext of the target update package to the to-be-updated device. After receiving the ciphertext of the target update package, the to-be-updated device decrypts the ciphertext of the target update package based on an attribute key that is in the attribute set of the to-be-updated device and matches the access policy, to obtain a plaintext of the target update package, and finally performs update based on the target update package. To be specific, only a to-be-updated device that has attribute information (to be specific, has a matched attribute key) that meets the prerequisite in the access policy can perform decryption to obtain the target update package. In this embodiment of the present invention, a related public key, a related master key, and a related attribute key are pre-negotiated between the server and the to-be-updated device, and the public key and the attribute key are distributed to the to-be-updated device that has the corresponding attribute information. Therefore, after the procedure of step S901 to step S903, not only authorization of a source of the target update package, transmission confidentiality, and transmission integrity can be ensured, but also an update process of mandatorily detecting prerequisites of the identity and the status of the device can be implemented, namely, the device update solution that can meet detection on a plurality of prerequisites. When this embodiment of the present invention is applied to a vehicle-mounted device update scenario, security and accuracy of vehicle update can be ensured.

In a possible implementation, the attribute set includes the one or more pieces of attribute information, and the target update package includes an updated attribute key corresponding to at least one piece of attribute information in the attribute set. In this embodiment of the present invention, because the attribute key may be updated or changed, the server may further sends the target update package including a latest attribute key, so that a vehicle that meets an attribute information condition can decrypt the update package based on the latest attribute key, to prevent from sending the updated attribute key to the to-be-updated device through another extra procedure.

In a possible implementation, the attribute set includes the one or more pieces of attribute information, and different to-be-updated devices with same at least one attribute information correspond to a same public key and a same corresponding master key. In this embodiment of the present invention, for different to-be-updated devices with same one or more pieces of attribute information, the server uses a same public key and a same corresponding master key, so that a storage amount and a calculation amount on the server can be reduced, and update efficiency can be improved. For example, a same public key and a same master key may be used for vehicles of a same model.

In this embodiment of the present invention, the ciphertext-policy attribute-based encryption (CP-ABE) is specifically applied to a device update scenario. The update request of the to-be-updated device carries the attribute set (including the one or more pieces of attribute information of the device) of the to-be-updated device, so that the server may generate the corresponding access policy based on the attribute set in the update request and encrypt the update package of the to-be-updated device according to the access policy. Finally, a device that meets a prerequisite (to be specific, the device has an attribute key corresponding to matched attribute information) set in the access policy can correctly decrypt and obtain the update package, thereby implementing mandatory detection of the update condition and fine-grained access control of the update package. In other words, because an unauthorized device or a device that does not meet the update condition does not have the attribute key corresponding to the matched attribute information, the unauthorized device or the device that does not meet the update condition cannot obtain or decrypt the update package, thereby ensuring security and accuracy of a device update process.

It should be noted that, although the foregoing embodiment is described mainly by using the smart vehicle/in-vehicle system update scenario as an example, it does not indicate that the device update method in this application can be applied only to the vehicle-mounted device update scenario. As described above, the device update method in this application may be further applied to scenarios such as a scenario in which a server manages a smart appliance to perform update, a scenario in which a server manages a virtual machine to perform system update, a scenario in which a server manages a terminal to perform batch update of a system, and a scenario in which a smartphone manages a smart wearable device to perform device update. Other scenarios and examples are not listed and described one by one.

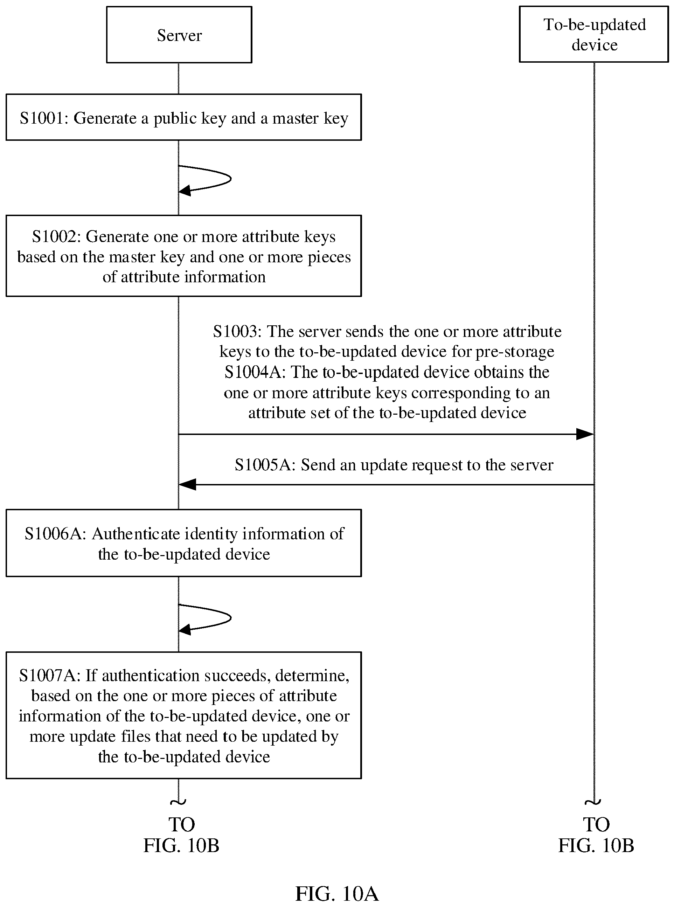

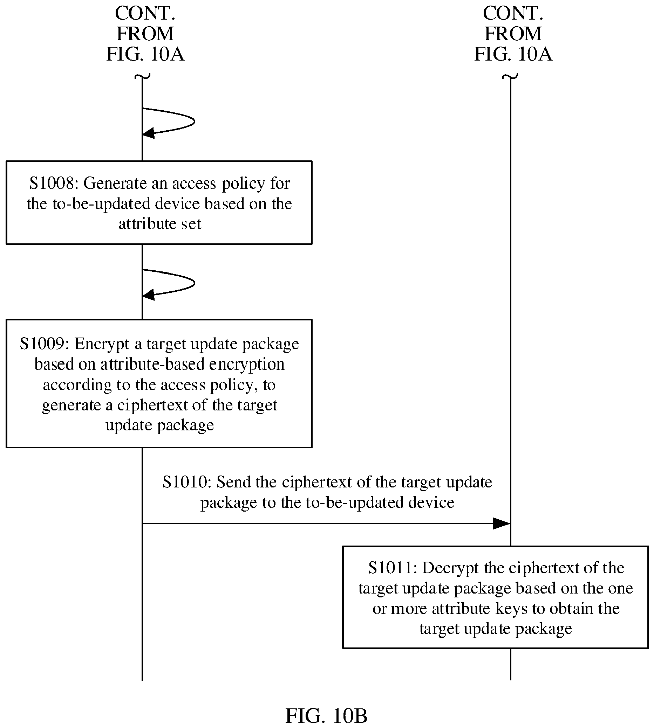

FIG. 10A and FIG. 10B are a schematic flowchart of another device update method according to an embodiment of the present invention. The device update method may be applied to the system architecture 1, and is applicable to any one of the application scenarios in FIG. 1 and FIG. 2. The following provides description from a perspective of interaction between a server and a to-be-updated device with reference to FIG. 10A and FIG. 10B. The method embodiment may include the following step S1001 to step S1011, and step S1001 to step S1011 include step S1004-A to step S1007-A.

S1001: The server generates a public key and a master key, where the master key is a private key corresponding to the public key.

S1002: The server generates one or more attribute keys based on the master key and one or more pieces of attribute information.

S1003: The server sends the one or more attribute keys to the to-be-updated device for pre-storage. The one or more attribute keys are used by the to-be-updated device to decrypt a ciphertext of a target update package to obtain the target update package.

S1004-A: The to-be-updated device obtains one or more attribute keys corresponding to an attribute set of the to-be-updated device.

S1005-A: The to-be-updated device sends an update request to the server, and the server receives the update request sent by the to-be-updated device. The update request includes the attribute set of the to-be-updated device, and the attribute set includes the one or more pieces of attribute information of the to-be-updated device.

S1006-A: The server authenticates identity information of the to-be-updated device.

S1007-A: If authentication succeeds, the server determines, based on the one or more pieces of attribute information of the to-be-updated device, one or more update files that need to be updated by the to-be-updated device, where the target update package includes the one or more update files.

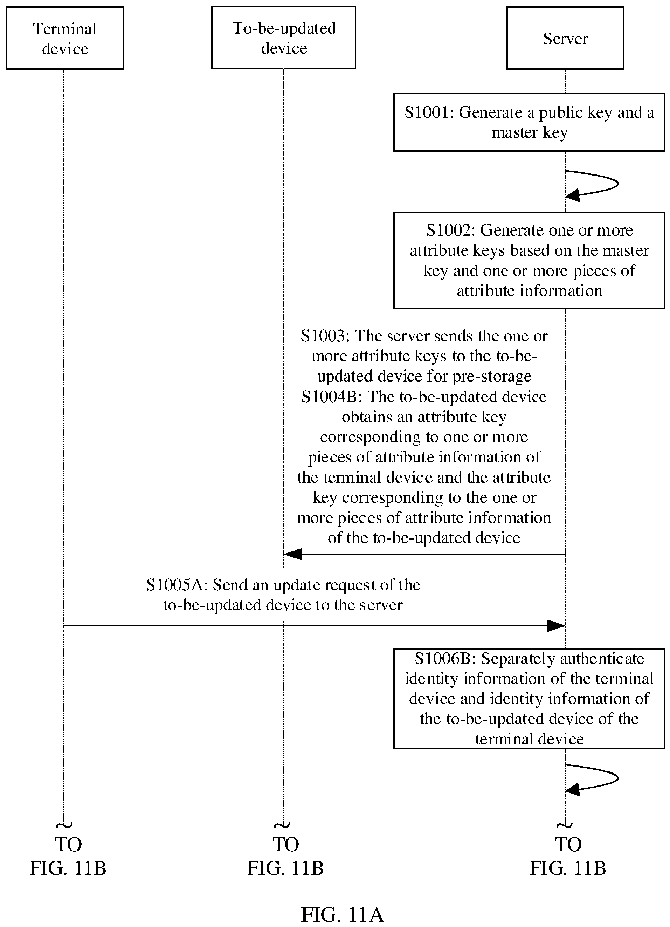

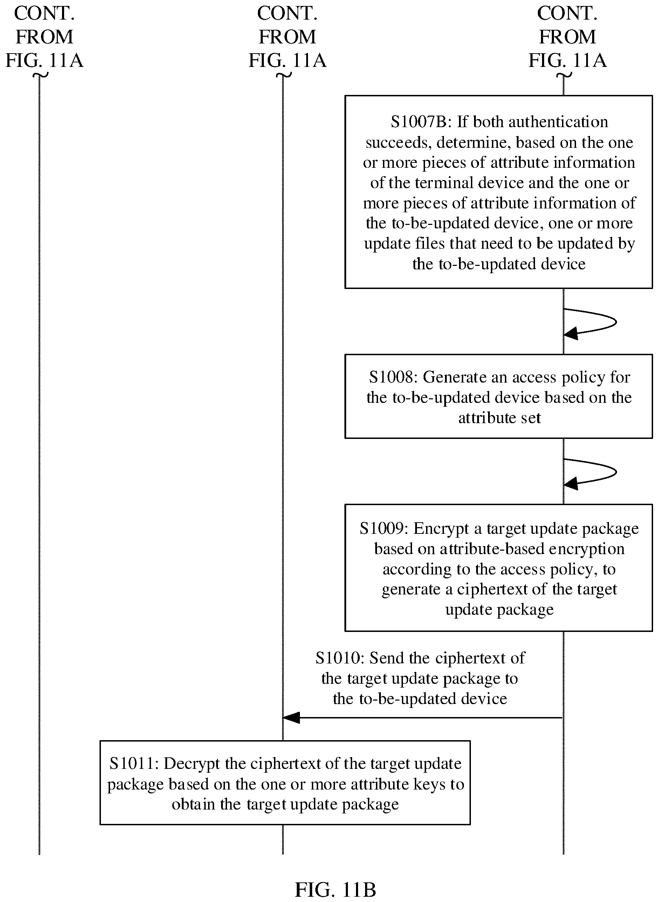

Alternatively, step S1004-A to step S1007-A may be replaced with the following step S1004-B to step S1007-B. FIG. 11A and FIG. 11B are a schematic flowchart of still another device update method according to an embodiment of the present invention. The device update method may be applied to the system architecture 2, and is applicable to any one of the application scenarios in FIG. 1 and FIG. 3. The method embodiment may include the following step S1001 to step S1011, and step S1001 to step S1011 include the following step S1004-B to step S1007-B.

S1004-B: The to-be-updated device obtains an attribute key corresponding to one or more pieces of attribute information of a terminal device and an attribute key corresponding to the one or more pieces of attribute information of the to-be-updated device.

S1005-B: The terminal device sends an update request of the to-be-updated device to the server, and the server receives the update request of the to-be-updated device sent by the terminal device. The update request includes the attribute set of the to-be-updated device, and the attribute set includes the one or more pieces of attribute information of the terminal device and the one or more pieces of attribute information of the to-be-updated device.

S1006-B: The server separately authenticates identity information of the terminal device and identity information of the to-be-updated device of the terminal device.

S1007-B: If both authentication succeeds, the server determines, based on the one or more pieces of attribute information of the terminal device and the one or more pieces of attribute information of the to-be-updated device, one or more update files that need to be updated by the to-be-updated device, where the target update package includes the one or more update files.

S1008: The server generates an access policy for the to-be-updated device based on the attribute set.

S1009: The server encrypts the target update package based on attribute-based encryption according to the access policy, to generate the ciphertext of the target update package.

S1010: The server sends the ciphertext of the target update package to the to-be-updated device, and the to-be-updated device receives the ciphertext that is of the target update package and that is sent by the server;

S1011: The to-be-updated device decrypts the ciphertext of the target update package based on the one or more attribute keys to obtain the target update package.

Specifically, a smart vehicle/in-vehicle system update scenario is mainly used as an example for description below. To be specific, the to-be-updated device may be a smart vehicle/in-vehicle system. The update request may be an update request for one or more to-be-updated vehicle-mounted units (for example, a human-machine interface HMI, a battery management system BMS, and an electronic control unit) in the smart vehicle/in-vehicle system.

In step S1001 to step S1003, the server generates the public key and the master key, where the master key is a private key corresponding to the public key. The server generates the one or more attribute keys based on the master key and the one or more pieces of attribute information. The server sends the one or more attribute keys to the to-be-updated device for pre-storage, and the one or more attribute keys are used by the to-be-updated device to decrypt the ciphertext of the target update package to obtain the target update package. To be specific, in an initial phase, the server needs to generate the public key, the master key (a private key corresponding to the public key), and the corresponding attribute key that are to be used in a subsequent secure update process of the to-be-updated device, and send the attribute key to a to-be-updated device that has the corresponding attribute information, to ensure a subsequent secure device update process based on the ciphertext-policy attribute-based encryption. It should be noted that, if the one or more attributes correspond to the embodiment in FIG. 11A and FIG. 11B, the one or more attribute keys further include the attribute key corresponding to the attribute information of the terminal device. To be specific, the access policy needs to be subsequently generated based on the attribute information of the terminal device and the attribute information of the to-be-updated device. Correspondingly, the attribute set included in the update request received by the server also includes the one or more pieces of attribute information of the terminal device.

In steps S1004-A to S1007-A, the to-be-updated device sends the update request to the server, and the update request carries the one or more pieces of attribute information of the to-be-updated device. For example, a to-be-updated vehicle sends, to the server, an update request that carries attribute information such as a vehicle identification number, an engine number, a license plate number, a vehicle model serial number, and a hardware version number of a vehicle component and a software version number of the vehicle component of the to-be-updated vehicle. The attribute set includes the one or more pieces of attribute information of the to-be-updated device. The target update package includes the one or more update files (for example, update files respectively corresponding to a plurality of to-be-updated vehicle-mounted units in the smart vehicle) of the to-be-updated device. Further, after obtaining the update request of the to-be-updated device, the server first performs identity authentication on the update request. If the identity authentication succeeds, it indicates that an identity of the to-be-updated device is authorized. Further, the server may determine a corresponding target update package based on the attribute information that is of the to-be-updated device and that is in the update request. For example, the server determines, based on a hardware version number and a software version number in the attribute set, an update file that currently needs to be updated by the smart vehicle. The update package is determined by the server based on the attribute information of the to-be-updated device. Therefore, it can be ensured that the to-be-updated device can download an update package that is precisely required by the to-be-updated device and that meets a condition, to prevent the update package from not meeting an attribute requirement of the to-be-updated device, and prevent a to-be-updated device that does not comply with the attribute information from unauthorizedly obtaining the update package. This further ensures security and accuracy of a device update process.

Optionally, in step S1001-B to step S1007-B, the update request is sent to the server by using the terminal device bound to the to-be-updated device. In this case, the update request carries the one or more pieces of attribute information of the terminal device and the one or more pieces of attribute information of the to-be-updated device. Optionally, before sending the update request to the server, the terminal device further obtains the one or more pieces of attribute information of the terminal device and the one or more pieces of attribute information of the to-be-updated device. For example, a smartphone bound to the to-be-updated vehicle sends, to the server, an update request that carries attribute information such as a phone number of the smartphone, a mobile phone identity of the smartphone, and software version information of the phone, and carries the attribute information such as the vehicle identification number, the engine number, the license plate number, the vehicle model serial number, and the hardware version number of the vehicle component and the software version number of the vehicle component of the to-be-updated vehicle. After obtaining the update request of the to-be-updated device, the server first performs identity authentication on the terminal device and the to-be-updated device. If both the identity authentication succeeds, it indicates that the requested terminal device is authorized, and the to-be-updated device that the terminal device requests to update is also authorized. In addition, the update package is determined by the server jointly based on the attribute information of the terminal device and the attribute information of the to-be-updated device. Therefore, it can be ensured that the to-be-updated device can perform secure update only when both the attribute information of the terminal device and the attribute information of the to-be-updated device bound to the terminal device meet update conditions in the access policy. This provides mandatory prerequisite detection of identities and statuses of the terminal device and the to-be-updated device, ensures security and accuracy of the device update process, and prevents an unauthorized device or a to-be-updated device that does not meet the conditions from obtaining the update package. In a possible implementation, the terminal device is a smartphone, and the attribute set includes one or more of attribute information of the phone number, the mobile phone identity, and the software version information of the phone. To be specific, update is performed by cooperating the smartphone and the to-be-updated device, an update system architecture applicable to some special scenarios is provided. For example, a user may securely update, by using a smartphone of the user, vehicle bound to the smartphone, and this is secure and convenient.

In step S1008, for a specific manner in which the server generates the access policy for the to-be-updated device based on the attribute set, two implementations are included for the foregoing two architectures in FIG. 10A and FIG. 10B or FIG. 11A and FIG. 11B.

Manner 1: The attribute set includes the one or more pieces of attribute information of the to-be-updated device. The server determines, based on the one or more pieces of attribute information of the to-be-updated device, the one or more update files that need to be updated by the to-be-updated device, where the target update package includes the one or more update files. The server determines the update conditions corresponding to the one or more update files, and generates the access policy based on the update conditions. In this embodiment of the present invention, the server determines the one or more update files based on the one or more pieces of attribute information of the to-be-updated device, and combines the update conditions of the one or more update files and then converts a combined update condition of the one or more update files into the access policy. To be specific, the server generates update conditions for the to-be-updated device based on related attribute information of the to-be-updated device, to restrict access permission of the target update package.

Manner 2: The server determines, based on the one or more pieces of attribute information of the terminal device and the one or more pieces of attribute information of the to-be-updated device, the one or more update files that need to be updated by the to-be-updated device, where the target update package includes the one or more update files. The server determines the update conditions corresponding to the one or more update files, and generates the access policy based on the update conditions. In this embodiment of the present invention, because the terminal device is introduced to assist the to-be-updated device in update, the server determines the one or more update files based on a plurality of pieces of attribute information of the terminal device and a plurality of pieces of attribute information of the to-be-updated device, and combines the update conditions of the one or more update files and converts a combined update condition of the one or more update files into the access policy. To be specific, the server generates update conditions for the to-be-updated device based on related attribute information of the terminal device and related attribute information of the to-be-updated device, to restrict access permission of the target update package.

For step S1009 to step S1011, refer to related descriptions of step S902 to step S903 in the embodiment in FIG. 9. Details are not described herein again.

Based on the foregoing descriptions, the following further describes the foregoing embodiments of the present invention with reference to specific application scenarios and accompanying drawings.

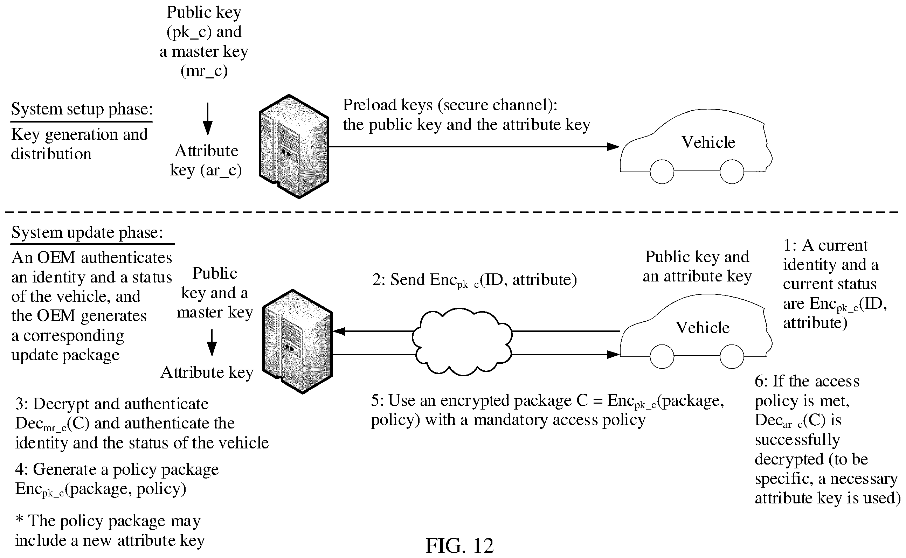

FIG. 12 is a schematic diagram of a smart vehicle update scenario according to an embodiment of the present invention. For example, a to-be-updated device is a smart vehicle and a server is a server of a vehicle manufacturer OEM. A device update procedure in this application is divided into a system setup phase (setup phase) and a system update phase (update phase).

### 1. The system setup phase (setup phase) mainly includes key generation and distribution.

(1) The server of the vehicle manufacturer OEM performs system setting for a vehicle of a specific vehicle model (Car Model), and generates a public key (pk_c) and a master key (mr_c) by using a system parameter. The public key and the master key are a public-private key pair.
(2) The server of the OEM separately generates, based on the master key (mr_c) and different attribute information of smart vehicles, attribute keys (ar_c) corresponding to the different attribute information, and then sends the public key (pk_c) and the attribute keys (ar_c) to the smart vehicles that have the corresponding attribute information through a secure channel.

### 2. The system update phase (update phase) mainly includes that the server of the OEM authenticates an identity and a status of the vehicle and the OEM generates a corresponding update package.

(1) The smart vehicle currently has the public key (pk_c) and the attribute key (ar_c) corresponding to one or more pieces of attribute information that are configured by the server of the OEM in the system setup phase.
(2) The smart vehicle sends an update request to the server of the OEM. The update request includes identity information ID and status information attribute (namely, an attribute set) that are encrypted by using the public key (pk_c), and the identity information ID and the status information attribute are denoted as Enc_{pk_c}(ID, attribute).
(3) The server of the OEM decrypts and authenticates the received update request based on the master key (mr_c), to be specific, authenticates the identity and the status of the vehicle by using a corresponding decryption algorithm Dec_{mr_c}(C), where C refers to the update request.
(4) The server of the OEM generates a ciphertext of a target update package according to the public key (pk_c) and an access policy. The target update package may also be referred to as a policy package, and is denoted as Enc_{pk_c}(package, policy). Optionally, the policy package may include a new attribute key or an updated attribute key.
(5) The server of the OEM sends, to the smart vehicle, the target update package C = Enc_{pk_c}(package, policy) encrypted by using the access policy and the public key (pk_c). Herein, C refers to the ciphertext of the target update package.
(6) The smart vehicle receives the ciphertext of the target update package. If the access policy is met (to be specific, a necessary attribute key is used), the smart vehicle may successfully decrypt Dec_{ar_c}(C) by using the corresponding attribute key (ar_c).

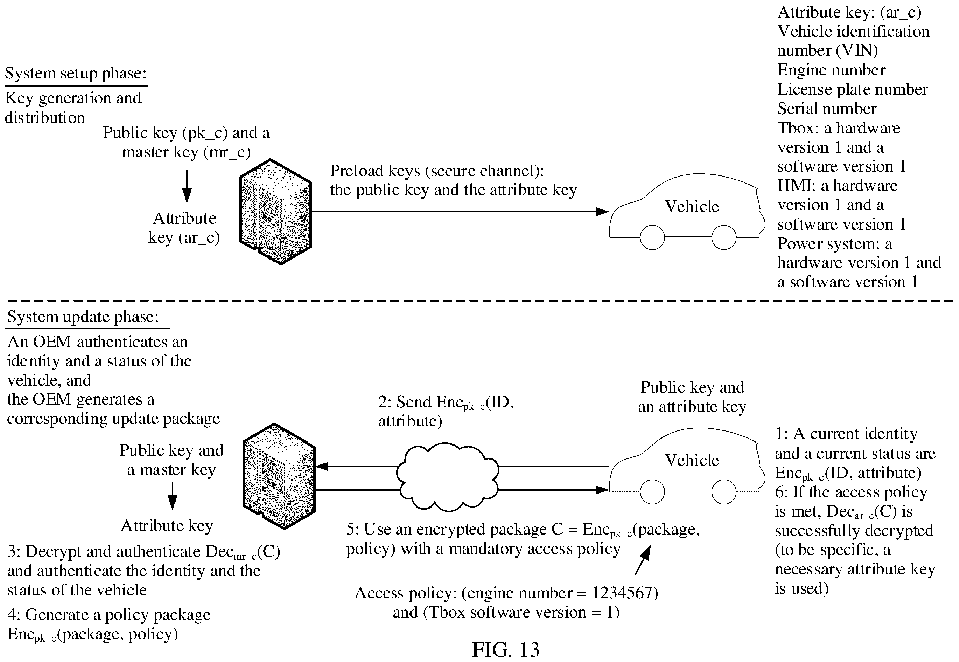

FIG. 13 is a schematic diagram of another smart vehicle update scenario according to an embodiment of the present invention. For example, a to-be-updated device is a smart vehicle and a server is a server of a vehicle manufacturer OEM. A device update procedure in this application is divided into a system setup phase (setup phase) and a system update phase (update phase).

### 1. The system setup phase (setup phase) mainly includes key generation and distribution.

(1) The server of the vehicle manufacturer OEM performs system setting for a vehicle of a specific vehicle model (Car Model), and generates a public key (pk_c) and a master key (mr_c) by using a system parameter. The public key and the master key are a public-private key pair.
(2) The server of the OEM separately generates, based on the master key (mr_c) and different attribute information of smart vehicles, attribute keys (ar_c) corresponding to the different attribute information, and then sends the public key (pk_c) and the attribute keys (ar_c) to the smart vehicles that have the corresponding attribute information through a secure channel. For example, the attribute information of the smart vehicle includes a vehicle identification number (VIN), an engine number, a license plate number, a serial number, a hardware version 1 and a software version 1 of a TBox, a hardware version 1 and a software version 1 of an HMI, a hardware version 1 and a software version 1 of a power system, and the like.

### 2. The system update phase (update phase) mainly includes that the server of the OEM authenticates an identity and a status of the vehicle and the OEM generates a corresponding update package.

(1) The smart vehicle currently has the public key (pk_c) and the attribute key (ar_c) corresponding to one or more pieces of attribute information that are configured by the server of the OEM in the system setup phase.
(2) The smart vehicle sends an update request to the server of the OEM. The update request includes identity information ID and status information attribute (namely, an attribute set) that are encrypted by using the public key (pk_c), and the identity information ID and the status information attribute are denoted as Enc_{pk_c}(ID, attribute).
(3) The server of the OEM decrypts and authenticates the received update request based on the master key (mr_c), to be specific, authenticates the identity and the status of the vehicle by using a corresponding decryption algorithm Dec_{mr_c}(C), where C refers to the update request.
(4) The server of the OEM generates a ciphertext of a target update package according to the public key (pk_c) and an access policy. The target update package may also be referred to as a policy package, and is denoted as Enc_{pk_c}(package, policy). For example, the access policy is (engine number = 1234567) and (TBox software version = 1).
(5) The server of the OEM sends, to the smart vehicle, the target update package C = Enc_{pk_c}(package, policy) encrypted by using the access policy and the public key (pk_c). Herein, C refers to the ciphertext of the target update package.
(6) The smart vehicle may receive the ciphertext of the target update package by using the TBox, and may detect, by using a primary electronic control unit, whether the smart vehicle has an attribute key (ar_c) whose engine number is 1234567 and an attribute key (ar_c) whose TBox software version number is 1. If the smart vehicle has both the attribute key (ar_c) whose engine number is 1234567 and the attribute key (ar_c) whose TBox software version number is 1, the ciphertext Dec_{ar_c}(C) of the target update package can be correctly decrypted. If the smart vehicle does not have the attribute key (ar_c) whose engine number is 1234567 or the attribute key (ar_c) whose TBox software version number is 1, the ciphertext Dec_{ar_c}(C) of the target update package cannot be decrypted. To be specific, this implements mandatory prerequisite detection on the identity and the status of the vehicle.

A difference between this embodiment of the present invention and the embodiment in FIG. 12 lies in that an example of a specific access policy is provided for the attribute information of the smart vehicle, to implement mandatory detection on an update condition.

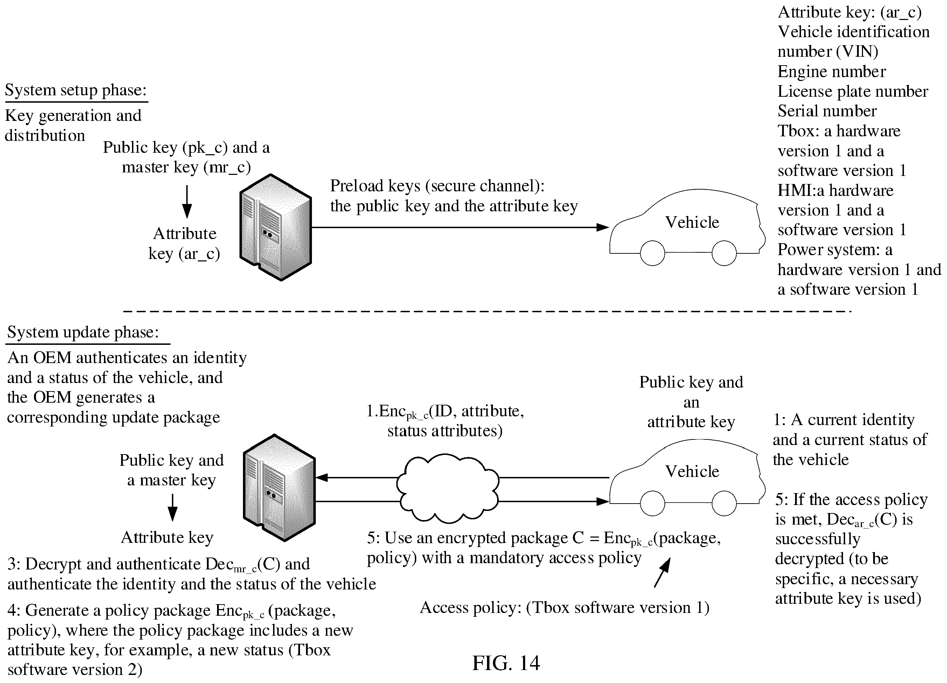

FIG. 14 is a schematic diagram of still another smart vehicle update scenario according to an embodiment of the present invention. For example, a to-be-updated device is a smart vehicle and a server is a server of a vehicle manufacturer OEM. A device update procedure in this application is divided into a system setup phase (setup phase) and a system update phase (update phase).

### 1. The system setup phase (setup phase) mainly includes key generation and distribution.

(1) The server of the vehicle manufacturer OEM performs system setting for a vehicle of a specific vehicle model (Car Model), and generates a public key (pk_c) and a master key (mr_c) by using a system parameter. The public key and the master key are a public-private key pair.
(2) The server of the OEM separately generates, based on the master key (mr_c) and different attribute information of smart vehicles of this model, attribute keys (ar_c) corresponding to the different attribute information, and then sends the public key (pk_c) and the attribute keys (ar_c) to the smart vehicles that have the corresponding attribute information through a secure channel. For example, the attribute information includes a vehicle identification number (VIN), an engine number, a license plate number, a serial number, a hardware version 1 and a software version 1 of a TBox, a hardware version 1 and a software version 1 of an HMI, and a hardware version 1 and a software version 1 of a power system.

### 2. The system update phase (update phase) mainly includes that the server of the OEM authenticates an identity and a status of the vehicle and the OEM generates a corresponding update package.

(1) The smart vehicle currently has the public key (pk_c) and the attribute key (ar_c) corresponding to one or more pieces of attribute information that are configured by the server of the OEM in the system setup phase.
(2) The smart vehicle sends an update request to the server of the OEM. The update request includes identity information ID and status information attribute (namely, an attribute set) that are encrypted by using the public key (pk_c), and the identity information ID and the status information attribute are denoted as Enc_{pk_c}(ID, attribute).
(3) The server of the OEM decrypts and authenticates the received update request based on the master key (mr_c), to be specific, authenticates the identity and the status of the vehicle by using a corresponding decryption algorithm Dec_{mr_c}(C), where C refers to the update request.
(4) The server of the OEM generates a ciphertext of a target update package according to the public key (pk_c) and an access policy. The target update package may also be referred to as a policy package, and is denoted as Enc_{pk_c}(package, policy). For example, the access policy is (engine number = 1234567) and (TBox software version = 1). It can be seen from FIG. 14 that, in an original state (before update) of the vehicle, there is the TBox software version 1, and the target update package includes a software update package for the TBox, and the version number is 2 after the update. Therefore, the update package may include a new attribute key, and the attribute key corresponds to the TBox software version number 2. To be specific, not only software of the smart vehicle can be updated, but also the corresponding attribute key is updated.
(5) The server of the OEM sends, to the smart vehicle, the target update package C = Enc_{pk_c}(package, policy) encrypted by using the access policy and the public key (pk_c). Herein, C refers to the ciphertext of the target update package.
(6) The smart vehicle receives the ciphertext of the target update package. If the access policy is met (to be specific, a necessary attribute key is used), the smart vehicle may successfully decrypt Dec_{ar_c}(C) by using the corresponding attribute key (ar_c). For example, after obtaining the ciphertext of the target update package, a primary electronic control unit on the smart vehicle uses an attribute key (for example, an attribute key of the TBox software version number 1) to decrypt the ciphertext of the target update package. If the attribute key complies with the access policy, the update package can be correctly decrypted. In addition to the update package of the TBox software version number 2, the target update package further includes the attribute key of the TBox software version number 2. Therefore, the primary electronic control unit updates the attribute key of the TBox software version number 1 to the attribute key of the TBox software version number 2.

A difference between this embodiment of the present invention and the embodiment in FIG. 12 lies in that, in the system update phase, an updated attribute key of attribute information (for example, dynamic attribute information that changes this time) is carried in the target update package, to update the attribute key according to an update system.

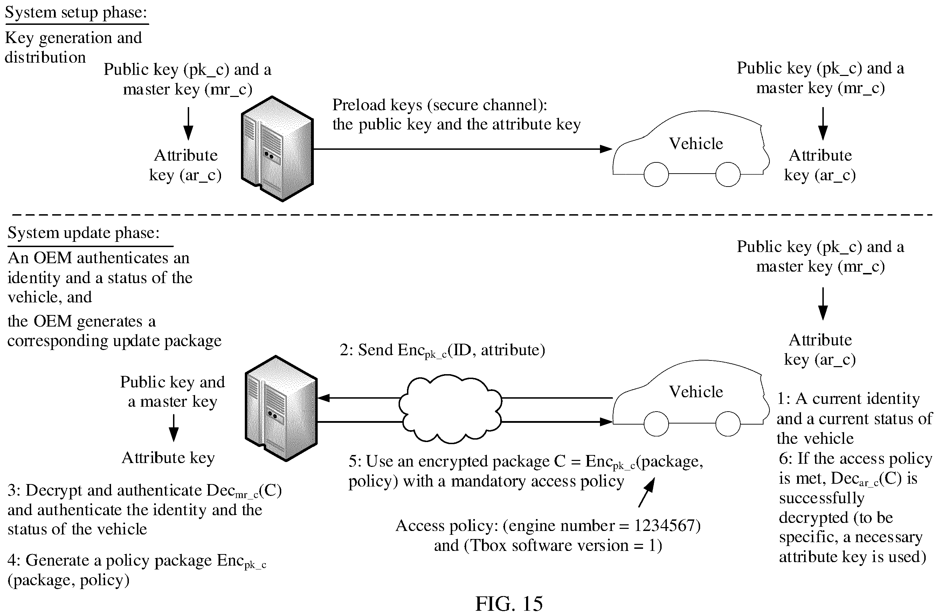

FIG. 15 is a schematic diagram of yet another smart vehicle update scenario according to an embodiment of the present invention. For example, a to-be-updated device is a smart vehicle and a server is a server of a vehicle manufacturer OEM. A device update procedure in this application is divided into a system setup phase (setup phase) and a system update phase (update phase).

### 1. The system setup phase (setup phase) mainly includes key generation and distribution.

(1) The server of the vehicle manufacturer OEM performs system setting for a vehicle of a specific vehicle model (Car Model), and generates a public key pk_c and a master key mr_c by using a system parameter.
(2) The server of the OEM presets the public key (pk_c) and master key (mr_c) for the vehicle of this model. Static attribute information and dynamic attribute information, namely, a corresponding attribute set, are not specially described in this embodiment of the present invention. Because the master key has been preset for the vehicle, the vehicle may generate a relative attribute key as required.

### 2. The system update phase (update phase) mainly includes that the server of the OEM authenticates an identity and a status of the vehicle and the OEM generates a corresponding update package.

(1) The smart vehicle currently has the public key (pk_c) and the master key mr_c that are configured by the server of the OEM in the system setup phase.
(2) The smart vehicle proposes an update requirement, and generates an encrypted identity attribute and an encrypted status attribute, namely, Enc_{pk_c}(ID attributes, status attributes), by using the public key (pk_c), an identity attribute, and a status attribute.
(3) The smart vehicle sends an update request including the encrypted identity attribute and the encrypted status attribute to the server of the OEM.
(4) After decrypting Dec_{mr_c}(C) based on the master key mr_c, the server of the OEM checks the identity and the status of the vehicle. Herein, a ciphertext C is Enc_{pk_c}(ID attributes, status attributes).
(5) The server of the OEM finds, based on status information in the attribute set, a software package (package) that can be updated, and confirms update prerequisites. The server of the OEM combines the prerequisites into an access policy (access policy), and encrypts an update package Enc_{pk_c}(package, policy) by using the access policy.
(6) The server of the OEM provides the encrypted update package for the smart vehicle, where the update package includes the access policy (access policy).
(7) When a primary electronic control unit on the smart vehicle obtains the update package, the primary electronic control unit generates an attribute key for an attribute of the vehicle by using the master key mr_c, and decrypts the update package based on the attribute key. If the attribute key complies with the access policy, the update package can be correctly decrypted.

A difference between this embodiment of the present invention and the embodiment in FIG. 12 lies in that, in the system setting stage, the server of the OEM also presets the master key on the smart vehicle, and a function of presetting the master key on the smart vehicle is that the smart vehicle may dynamically generate various attribute keys by using the master key, to support wider prerequisites, for example, a driving speed, a gear, and a network access status. More detailed condition detection is supported by using the wider prerequisites. In addition, in this embodiment of the present invention, there needs to be a higher degree of trust in the smart vehicle.

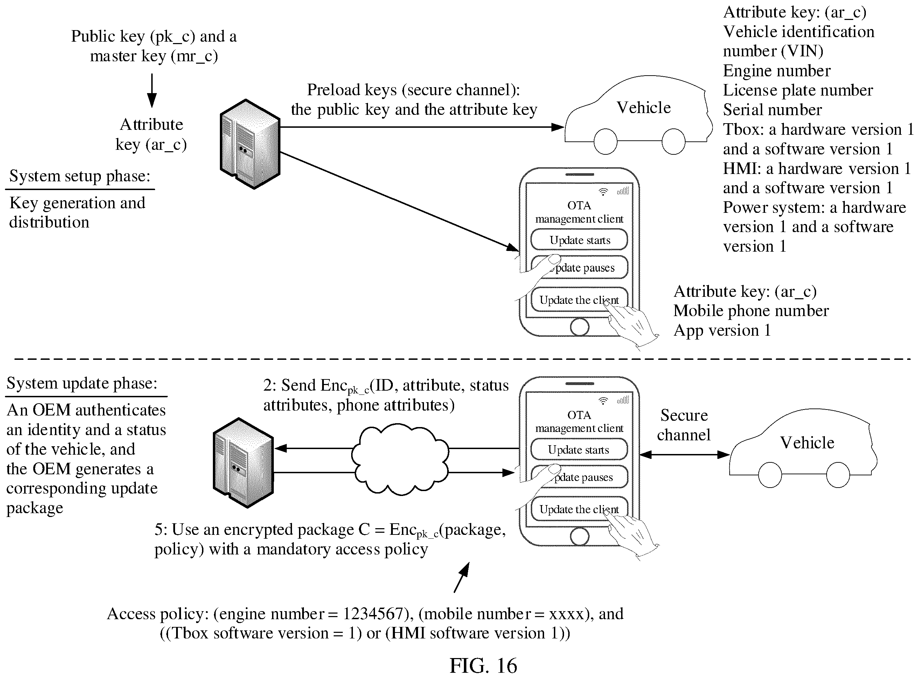

FIG. 16 is a schematic diagram of still yet another smart vehicle update scenario according to an embodiment of the present invention. For example, a to-be-updated device is a smart vehicle, a server is a server of a vehicle manufacturer OEM, and a terminal device is a smartphone. A device update procedure in this application is divided into a system setup phase (setup phase) and a system update phase (update phase).

### 1. The system setup phase (setup phase) mainly includes key generation and distribution.

(1) The server of the vehicle manufacturer OEM performs system setting for a smart vehicle of a specific vehicle model (Car Model), and generates a public key pk_c and a master key mr_c by using a system parameter.
(2) The server of the OEM generates, based on the master key (mr_c), an attribute key (ar_c) for attribute information corresponding to a defined prerequisite. Then, the public key (pk_c) and the attribute key (ar_c) are sent, through a secure channel, to a smart vehicle that has the corresponding attribute information. For example, the attribute information of the smart vehicle includes a vehicle identification number (VIN), an engine number, a license plate number, a serial number, a hardware version 1 and a software version 1 of a TBox, a hardware version 1 and a software version 1 of an HMI, and a hardware version 1 and a software version 1 of a power system.
(3) Further, the server of the OEM further needs to generate an attribute key for attribute information of the matched smartphone, and releases the attribute key to the smartphone through an additional secure channel. The attribute information of the smartphone also includes two parts: static attribute information and dynamic attribute information. For example, the static attribute information is a phone number (phone number), and the dynamic attribute information is an application version (application version) number.

### 2. The system update phase (update phase) mainly includes that the server of the OEM authenticates an identity and a status of the vehicle and the OEM generates a corresponding update package.

(1) The smart vehicle and the smartphone jointly propose an update requirement, and generate encrypted identity attributes and encrypted status attributes, namely, Enc_{pk_c}(ID attributes, status attributes) by using the public key pk_c, identity attributes, and status attributes.
(2) The smart vehicle sends an update request including the encrypted identity attribute and the encrypted status attribute to the server of the OEM.
(3) The server of the OEM decrypts and authenticates the received update request based on the master key (mr_c), to be specific, authenticates identities and statuses of the mobile phone and the vehicle by using a corresponding decryption algorithm Dec_{mr_c}(C), where C refers to the update request.
(4) The server of the OEM finds, based on status information in the attribute set, a software package (package) that can be updated, and confirms update prerequisites. The server of the OEM combines the prerequisites into an access policy (policy), and encrypts an update package Enc_{pk_c}(package, policy) by using the access policy. For example, the access policy is "an engine number is 1234567, a phone number is xxxx, and a software version number of a human-machine interface HMI is 1". The engine number may restrict that only the vehicle with the engine number can use the update package. The phone number may restrict that only the mobile phone with that phone number can participate in an update process. The software version number of the HMI may restrict a software condition of the vehicle.
(5) The server of the OEM provides the encrypted update package for the to-be-updated device, where the update package includes the access policy (access policy).
(6) When obtaining the update package, the smartphone and a primary electronic control unit on the smart vehicle perform joint decryption by using the attribute keys (for example, the engine number, the phone number, and the software version number of the HMI) of the smartphone and the primary electronic control unit on the smart vehicle. If the attribute keys comply with the access policy, the update package can be correctly decrypted. In FIG. 16, the access policy is that the mobile phone has an attribute key whose number is xxxx, and the vehicle has an attribute key (ar_c) whose engine number is 1234567 and an attribute key (ar_c) whose software version number of the HMI is 1. The update package Dec_{ar_c}(C) can be correctly decrypted.

A difference between this embodiment of the present invention and the embodiment in FIG. 12 lies in that update is performed with assistance of the smartphone. An update requirement is proposed and the received update package is decrypted through collaboration between the smartphone and the primary electronic control unit. It may be understood that in this system architecture, the update package may be separately decrypted by the smart vehicle, or the update package may be separately decrypted by the smartphone, or the update package may be decrypted jointly by the smart vehicle and the smartphone.

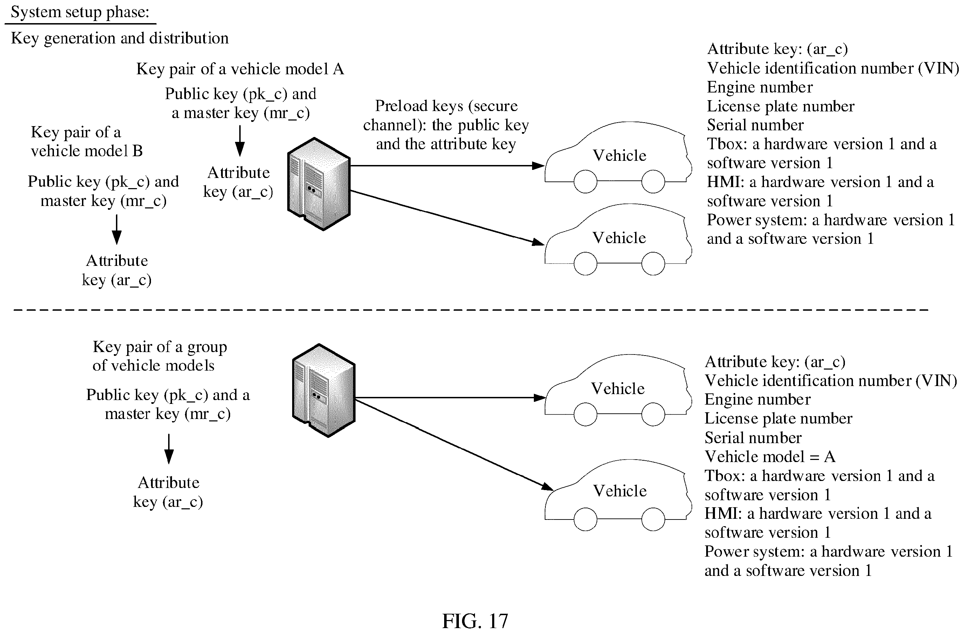

FIG. 17 is a schematic diagram of a further smart vehicle update scenario according to an embodiment of the present invention. For example, a to-be-updated device is a smart vehicle and a server is a server of a vehicle manufacturer OEM. A device update procedure in this application is divided into a system setup phase (setup phase) and a system update phase (update phase). For descriptions of the system setup phase (setup phase) and the system update phase, refer to the related procedure in any one of the foregoing embodiments in FIG. 12 to FIG. 16. Details are not described herein again.

A difference between this embodiment of the present invention and the embodiment in FIG. 12 lies in that in the system setup phase, key pairs managed by a vehicle factory can be reduced by using different attribute designs. The upper half of FIG. 17 shows that the server of the OEM separately generates a pair of keys for smart vehicles of different vehicle models. To be specific, a vehicle model A corresponds to a key pair, and a vehicle model B corresponds to another key pair. In other words, for each vehicle model, the server of the OEM needs to manage a pair of keys. As a result, a quantity of key pairs to be managed by the server of the OEM is directly proportional to a quantity of produced vehicle models. The lower half of FIG. 17 shows that when the server of the OEM also lists a vehicle model (Car Model) as one piece of attribute information, a pair of keys may be used to manage different vehicle models, and different vehicle model attribute keys are used for distinguishing.

The foregoing describes in detail the methods in the embodiments of the present invention, and the following provides related apparatuses of the embodiments of the present invention.

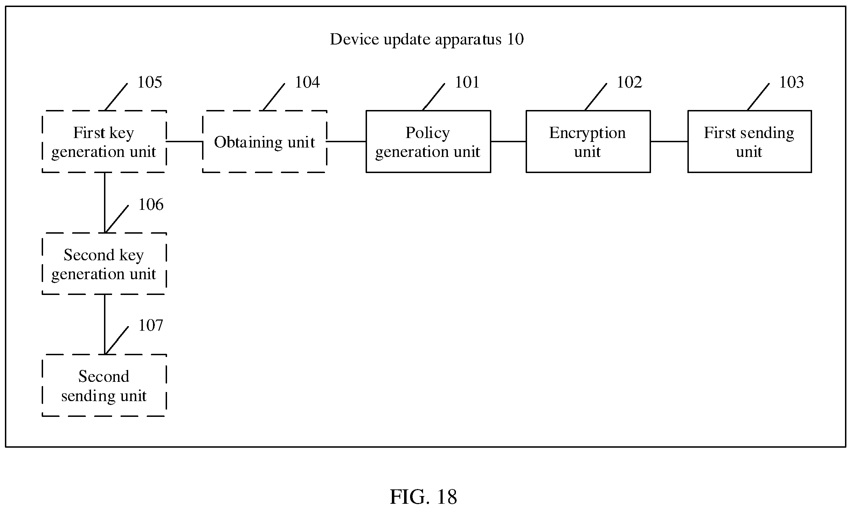

FIG. 18 is a schematic structural diagram of a device update apparatus according to an embodiment of the present invention. The device update apparatus 10 may be applied to a server. As shown in the system architecture in FIG. 4 or FIG. 5, the device update apparatus 10 includes:
a policy generation unit 101, configured to generate an access policy for a to-be-updated device based on an attribute set of the to-be-updated device;
an encryption unit 102, configured to encrypt a target update package based on attribute-based encryption according to the access policy, to generate a ciphertext of the target update package; and
a first sending unit 103, configured to send the ciphertext of the target update package to the to-be-updated device, where the ciphertext of the target update package is used by the to-be-updated device to perform decryption based on one or more attribute keys corresponding to the attribute set to obtain the target update package.

In a possible implementation, the apparatus 10 further includes:
an obtaining unit 104, configured to obtain an update request of the to-be-updated device, where the update request includes the attribute set of the to-be-updated device.

In a possible implementation, the obtaining unit 104 is specifically configured to:
receive the update request sent by the to-be-updated device, where the attribute set includes one or more pieces of attribute information of the to-be-updated device.

In a possible implementation, the attribute set includes the one or more pieces of attribute information of the to-be-updated device, and the policy generation unit 101 is specifically configured to:
determine, based on the one or more pieces of attribute information of the to-be-updated device, one or more update files that need to be updated by the to-be-updated device, where the target update package includes the one or more update files; and
determine update conditions corresponding to the one or more update files, and generate the access policy based on the update conditions.

In a possible implementation, the obtaining unit 104 is specifically configured to:
receive the update request that is of the to-be-updated device and that is sent by a terminal device, where the attribute set includes one or more pieces of attribute information of the terminal device and one or more pieces of attribute information of the to-be-updated device.

In a possible implementation, the policy generation unit 101 is specifically configured to:
determine, based on the one or more pieces of attribute information of the terminal device and the one or more pieces of attribute information of the to-be-updated device, one or more update files that need to be updated by the to-be-updated device, where the target update package includes the one or more update files; and
determine update conditions corresponding to the one or more update files, and generate the access policy based on the update conditions.

In a possible implementation, the attribute set includes the one or more pieces of attribute information, and the apparatus 10 further includes:
a first key generation unit 105, configured to generate a public key and a master key, where the master key is a private key corresponding to the public key;
a second key generation unit 106, configured to generate, based on the master key and the one or more pieces of attribute information, the one or more attribute keys corresponding to the attribute set; and
a second sending unit 107, configured to send the one or more attribute keys to the to-be-updated device for pre-storage, where the one or more attribute keys are used by the to-be-updated device to decrypt the ciphertext of the target update package to obtain the target update package.

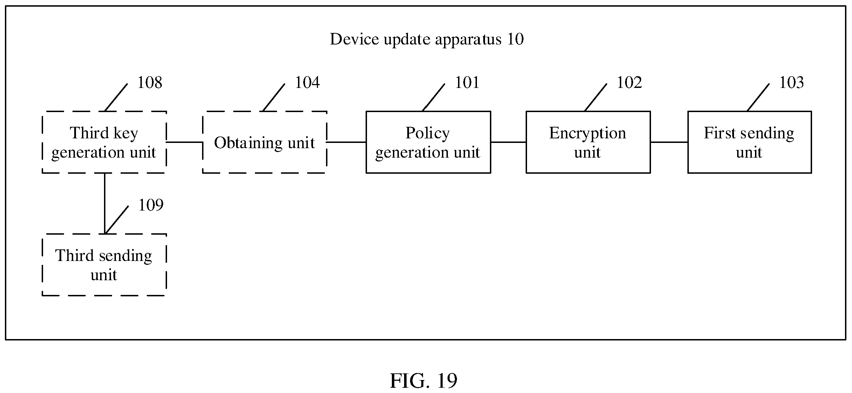

In a possible implementation, FIG. 19 is a schematic structural diagram of another device update apparatus according to an embodiment of the present invention. The apparatus 10 further includes:
a third key generation unit 108, configured to generate a public key and a master key, where the master key is a private key corresponding to the public key; and
a third sending unit 109, configured to send the master key to the to-be-updated device for pre-storage, where the master key is used by the to-be-updated device to generate the one or more attribute keys corresponding to the attribute set, and the one or more attribute keys are used by the to-be-updated device to decrypt the ciphertext of the target update package to obtain the target update package.

In a possible implementation, the attribute set includes the one or more pieces of attribute information, and the target update package includes an updated attribute key corresponding to at least one piece of attribute information in the attribute set.

In a possible implementation, the attribute set includes the one or more pieces of attribute information, and different to-be-updated devices with same at least one attribute information correspond to a same public key and a same corresponding master key.

In a possible implementation, the to-be-updated device is a smart vehicle, and the attribute set includes one or more of attribute information of a vehicle identification number, an engine number, a license plate number, a vehicle model serial number, and a hardware version number of a vehicle component and a software version number of the vehicle component.

In a possible implementation, the terminal device is a smartphone, and the attribute set includes one or more of attribute information of a phone number, a mobile phone identity, and software version information of the phone.

It should be noted that, for a function of each functional unit of the device update apparatus 10 described in the embodiments of the present invention, reference may be made to related descriptions of the server in the method embodiments shown in FIG. 1 to FIG. 17. Details are not described herein again.

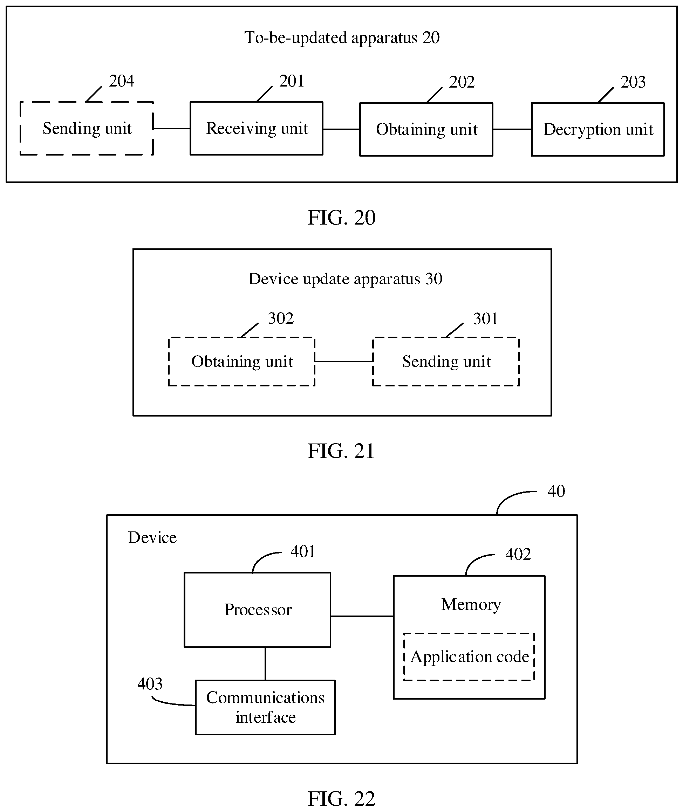

FIG. 20 is a schematic structural diagram of a to-be-updated apparatus according to an embodiment of the present invention. The to-be-updated apparatus 20 may be applied to a to-be-updated device. For example, in the system architecture in FIG. 4 or FIG. 5, the to-be-updated apparatus 20 includes:
a receiving unit 201, configured to receive a ciphertext that is of a target update package and that is sent by a server, where the ciphertext of the target update package is generated by the server by encrypting the target update package based on attribute-based encryption according to an access policy, and the access policy is generated by the server based on an attribute set of the to-be-updated device; and
an obtaining unit 202, configured to obtain one or more attribute keys corresponding to the attribute set; and
a decryption unit 203, configured to decrypt the ciphertext of the target update package based on the one or more attribute keys to obtain the target update package.

In a possible implementation, the apparatus 20 further includes:
a sending unit 204, configured to send an update request, where the update request includes the attribute set of the to-be-updated device.

In a possible implementation, the attribute set includes one or more pieces of attribute information, and the obtaining unit 202 is specifically configured to:
receive the one or more attribute keys sent by the server, and pre-store the one or more attribute keys, where the one or more attribute keys are one or more attribute keys generated based on a master key and the one or more pieces of attribute information after the server generates a public key and the master key, and the master key is a private key corresponding to the public key.

In a possible implementation, the attribute set includes one or more pieces of attribute information, and the obtaining unit 202 is specifically configured to:
receive a master key sent by the server, and pre-store the master key, where the master key is generated by the server; and
generate, by the to-be-updated device, the one or more attribute keys based on the master key and the one or more pieces of attribute information.

In a possible implementation, the attribute set includes the one or more pieces of attribute information, and the target update package includes an updated attribute key corresponding to at least one piece of attribute information in the attribute set.

In a possible implementation, the attribute set includes the one or more pieces of attribute information, and different to-be-updated devices with same at least one attribute information correspond to a same public key and a same corresponding master key.

In a possible implementation, the to-be-updated device is a smart vehicle, and the attribute set includes one or more of attribute information of a vehicle identification number, an engine number, a license plate number, a vehicle model serial number, and a hardware version number of a vehicle component and a software version number of the vehicle component.

It should be noted that, for a function of each functional unit of the to-be-updated apparatus 20 described in this embodiment of the present invention, reference may be made to related descriptions of the to-be-updated device in the method embodiments shown in FIG. 1 to FIG. 17. Details are not described herein again.

FIG. 21 is a schematic structural diagram of another device update apparatus according to an embodiment of the present invention. The device update apparatus 30 may be applied to a terminal device. For example, in the system architecture in FIG. 5, the device update apparatus 30 includes:
a sending unit 301, configured to send an update request of a to-be-updated device to a server, where the update request includes an attribute set of the to-be-updated device, and the attribute set includes one or more pieces of attribute information of the terminal device and one or more pieces of attribute information of the to-be-updated device.

In a possible implementation, the update request further includes identity information of the terminal device and identity information of the to-be-updated device. The identity information of the terminal device and the identity information of the to-be-updated device are used by the server to separately perform authentication. If both the authentication succeeds, one or more update files that need to be updated by the to-be-updated device are determined based on the one or more pieces of attribute information of the terminal device and the one or more pieces of attribute information of the to-be-updated device, where the target update package includes the one or more update files.

In a possible implementation, the apparatus further includes an obtaining unit 302, configured to obtain the one or more pieces of attribute information of the terminal device and the one or more pieces of attribute information of the to-be-updated device.

It should be noted that, for a function of each functional unit of the device update apparatus 30 described in this embodiment of the present invention, reference may be made to related descriptions of the terminal device in the method embodiments shown in FIG. 1 to FIG. 17. Details are not described herein again.

FIG. 22 is a schematic structural diagram of a device according to an embodiment of the present invention. The server, the to-be-updated device, and the terminal device in this application may all be implemented by using a structure in FIG. 20. The device 40 includes at least one processor 401, at least one memory 402, and at least one communications interface 403. In addition, the device may further include general-purpose components such as an antenna, and details are not described herein.

The processor 401 may be a general-purpose central processing unit (CPU), a microprocessor, an application-specific integrated circuit (application-specific integrated circuit, ASIC), or one or more integrated circuits configured to control program execution of the foregoing solutions.

The communications interface 403 is used for communication with another device or a communications network, for example, an update server, a key server, or an in-vehicle device.

The memory 402 may be a read-only memory (read-only memory, ROM) or another type of static storage device capable of storing static information and an instruction, or a random access memory (random access memory, RAM) or another type of dynamic storage device capable of storing information and an instruction. Alternatively, the memory 302 may be an electrically erasable programmable read-only memory (Electrically Erasable Programmable Read-Only Memory, EEPROM), a compact disc read-only memory (Compact Disc Read-Only Memory, CD-ROM) or other compact disc storage, optical disc storage (including a compact disc, a laser disc, an optical disc, a digital versatile disc, a Blu-ray disc, or the like), a magnetic disk storage medium or another magnetic storage device, or any other medium that can be used to carry or store expected program code in a form of an instruction or a data structure form and that can be accessed by a computer. However, the memory 402 is not limited thereto. The memory may exist independently, and is connected to the processor through a bus. Alternatively, the memory may be integrated with the processor.

The memory 402 is configured to store application code for executing the foregoing solutions, and the processor 401 controls execution. The processor 401 is configured to execute the application program code stored in the memory 402, to implement related functions of the server, the to-be-updated device, and the terminal device in this application.

It should be noted that, for functions of the server, the to-be-updated device, and the terminal device described in the embodiments of the present invention, reference may be made to related descriptions in the method embodiments in FIG. 1 to FIG. 17. Details are not described herein again.

An embodiment of the present invention further provides a computer storage medium, and the computer storage medium may store a program. When the program is executed, some or all of the steps of any one of the device update methods described in the foregoing method embodiments are performed.

An embodiment of the present invention further provides a computer program, and the computer program includes an instruction. When a computer executes the computer program, the computer may be enabled to perform some or all of the steps of any one of the device update methods.

In the foregoing embodiments, the description of each embodiment has respective focuses. For a part that is not described in detail in an embodiment, refer to related descriptions in other embodiments.

It should be noted that, for brief description, the foregoing method embodiments are represented as a series of actions. However, a person skilled in the art should appreciate that this application is not limited to the described sequence of the actions, because according to this application, some steps may be performed in another sequence or simultaneously. It should be further appreciated by a person skilled in the art that the embodiments described in this specification all belong to preferred embodiments, and the involved actions and modules are not necessarily required by this application.

In the several embodiments provided in this application, it should be understood that the disclosed apparatus may be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The foregoing units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the foregoing integrated unit is implemented in the form of a software functional unit and sold or used as an independent product, the integrated unit may be stored in a computer-readable storage medium. Based on such an understanding, the technical solutions of this application essentially, or the part contributing to the prior art, or all or some of the technical solutions may be implemented in the form of a software product. The computer software product is stored in a storage medium and includes several instructions for instructing a computer device (which may be a personal computer, a server, or a network device) to perform all or some of the steps of the methods described in the embodiments of this application. The storage medium may include any medium that can store program code, such as a USB flash drive, a removable hard disk, a magnetic disk, an optical disc, a read-only memory (Read-Only Memory, ROM for short), or a random access memory (Random Access Memory, RAM for short).

The foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of this application, as defined in the appended claims.

## Claims

1. A device update method, comprising:
receiving, by a server, an update request that is of a to-be-updated device and that is sent by a terminal device, wherein the update request comprises an attribute set of the to-be-updated device, the attribute set of the to-be-updated device comprises one or more pieces of attribute information of the terminal device, and one or more pieces of attribute information of the to-be-updated device;
obtaining (S901), by the server, an access policy of the to-be-updated device based on the attribute set of the to-be-updated device, wherein the access policy comprises one or more pieces of attribute information of the terminal device, and one or more pieces of attribute information of the to-be-updated device, comprised in the attribute set of the to-be-updated device;
encrypting (S902), by the server, a target update package according to the access policy, to generate a ciphertext of the target update package; and
sending (S903), by the server, the ciphertext of the target update package to the to-be-updated device, wherein the ciphertext of the target update package is used by the to-be-updated device to perform decryption based on one or more attribute keys corresponding to the one or more attribute information in the access policy to obtain the target update package.

2. The method according to claim 1, wherein the obtaining, by the server, the access policy of the to-be-updated device based on the attribute set of the to-be-updated device comprises:
determining, by the server based on the attribute set of the to-be-updated device, one or more update files that need to be updated by the to-be-updated device, wherein the target update package comprises the one or more update files; and
determining, by the server, update conditions corresponding to the one or more update files, and generating the access policy based on the update conditions.

3. The method according to any one of claims 1 to 2, wherein the method further comprises:
generating (S1001), by the server, a public key and a master key, wherein the master key is a private key corresponding to the public key;
generating (S1002), by the server, the one or more attribute keys corresponding to the attribute set based on the master key and the attribute set; and
sending (S1003), by the server, the one or more attribute keys to the to-be-updated device for pre-storage, wherein the one or more attribute keys are used by the to-be-updated device to decrypt the ciphertext of the target update package to obtain the target update package.

4. The method according to any one of claims 1 to 3, wherein the method further comprises:
generating, by the server, a public key and a master key, wherein the master key is a private key corresponding to the public key; and
sending, by the server, the master key to the to-be-updated device for pre-storage, wherein the master key is used by the to-be-updated device to generate the one or more attribute keys corresponding to the attribute set, and the one or more attribute keys are used by the to-be-updated device to decrypt the ciphertext of the target update package to obtain the target update package.

5. A device update method, comprising:
receiving, by a to-be-updated device, a ciphertext that is of a target update package and that is sent by a server, wherein the ciphertext of the target update package is generated by the server by encrypting the target update package according to an access policy based on an attribute set of the to-be-updated device in response to an update request of the to-be-updated device from a terminal device, wherein the update request comprises an attribute set of the to-be-updated device, the attribute set of the to-be-updated device comprises one or more pieces of attribute information of the terminal device, and one or more pieces of attribute information of the to-be-updated device, and the access policy comprises one or more pieces of attribute information of the terminal device, and one or more pieces of attribute information of the to-be-updated device, comprised in the attribute set of the to-be-updated device;
obtaining, by the to-be-updated device, one or more attribute keys corresponding to the one or more attribute information in the access policy; and
decrypting, by the to-be-updated device, the ciphertext of the target update package based on the one or more attribute keys to obtain the target update package.

6. The method according to claim 5, wherein the obtaining, by the to-be-updated device, one or more attribute keys corresponding to the attribute set comprises:
receiving, by the to-be-updated device, the one or more attribute keys sent by the server, and pre-storing the one or more attribute keys, wherein the one or more attribute keys are one or more attribute keys generated based on a master key and the one or more pieces of attribute information after the server generates a public key and the master key, and the master key is a private key corresponding to the public key.

7. The method according to claim 5, wherein the obtaining, by the to-be-updated device, one or more attribute keys corresponding to the attribute set comprises:
receiving, by the to-be-updated device, a master key sent by the server, and pre-storing the master key, wherein the master key is generated by the server; and
generating, by the to-be-updated device, the one or more attribute keys based on the master key and the one or more pieces of attribute information.

8. A device update apparatus (10), applied to a server, wherein the apparatus comprises:
an obtaining unit (104), configured to receive an update request that is of a to-be-updated device and that is sent by a terminal device, wherein the update request comprises an attribute set of the to-be-updated device, the attribute set of the to-be-updated device comprises one or more pieces of attribute information of the terminal device, and one or more pieces of attribute information of the to-be-updated device;
a policy generation unit (101), configured to obtain an access policy of the to-be-updated device based on the attribute set of the to-be-updated device, wherein the access policy comprises one or more pieces of attribute information of the terminal device, and one or more pieces of attribute information of the to-be-updated device, comprised in the attribute set of the to-be-updated device;
an encryption unit (102), configured to encrypt a target update package according to the access policy, to generate a ciphertext of the target update package; and
a first sending unit (103), configured to send the ciphertext of the target update package to the to-be-updated device, wherein the ciphertext of the target update package is used by the to-be-updated device to perform decryption based on one or more attribute keys corresponding to the one or more attribute information comprised in the access policy to obtain the target update package.

9. The apparatus (10) according to claim 8, wherein the policy generation unit (101) is specifically configured to:
determine, based on the attribute set of the to-be-updated device, one or more update files that need to be updated by the to-be-updated device, wherein the target update package comprises the one or more update files; and
determine update conditions corresponding to the one or more update files, and generate the access policy based on the update conditions.

10. The apparatus (10) according to any one of claims 8 to 9, wherein the apparatus (10) further comprises:
a first key generation unit (105), configured to generate a public key and a master key, wherein the master key is a private key corresponding to the public key;
a second key generation unit (106), configured to generate, based on the master key and the attribute set, the one or more attribute keys corresponding to the attribute set; and
a second sending unit (107), configured to send the one or more attribute keys to the to-be-updated device for pre-storage, wherein the one or more attribute keys are used by the to-be-updated device to decrypt the ciphertext of the target update package to obtain the target update package.

11. The apparatus (10) according to any one of claims 8 to 10, wherein the apparatus (10) further comprises:
a third key generation unit (108), configured to generate a public key and a master key, wherein the master key is a private key corresponding to the public key; and
a third sending unit (109), configured to send the master key to the to-be-updated device for pre-storage, wherein the master key is used by the to-be-updated device to generate the one or more attribute keys corresponding to the attribute set, and the one or more attribute keys are used by the to-be-updated device to decrypt the ciphertext of the target update package to obtain the target update package.

12. A to-be-updated apparatus (20), applied to a to-be-updated device, wherein the apparatus comprises:
a receiving unit (201), configured to receive a ciphertext that is of a target update package and that is sent by a server, wherein the ciphertext of the target update package is generated by the server by encrypting the target update package according to an access policy based on an attribute set of the to-be-updated device in response to an update request of the to-be-updated device from a terminal device, wherein the update request comprises an attribute set of the to-be-updated device, the attribute set of the to-be-updated device comprises one or more pieces of attribute information of the terminal device, and one or more pieces of attribute information of the to-be-updated device, and the access policy comprises one or more pieces of attribute information of the terminal device, and one or more pieces of attribute information of the to-be-updated device, comprised in the attribute set of the to-be-updated device;
an obtaining unit (202), configured to obtain one or more attribute keys corresponding to the one or more attribute information in the access policy; and
a decryption unit (203), configured to decrypt the ciphertext of the target update package based on the one or more attribute keys to obtain the target update package.

13. The apparatus (20) according to claim 12, wherein the obtaining unit (202) is specifically configured to:
receive the one or more attribute keys sent by the server, and pre-store the one or more attribute keys, wherein the one or more attribute keys are one or more attribute keys generated based on a master key and the one or more pieces of attribute information after the server generates a public key and the master key, and the master key is a private key corresponding to the public key.

14. The apparatus (20) according to claim 12, wherein the obtaining unit (202) is specifically configured to:
receive a master key sent by the server, and pre-store the master key, wherein the master key is generated by the server; and
generate the one or more attribute keys based on the master key and the one or more pieces of attribute information.

## Patentansprüche

1. Vorrichtungsaktualisierungsverfahren, umfassend:
Empfangen, durch einen Server, einer Aktualisierungsanforderung, die von einer zu aktualisierenden Vorrichtung ist und die durch ein Endgerät gesendet wird, wobei die Aktualisierungsanforderung einen Attributsatz der zu aktualisierenden Vorrichtung umfasst, wobei der Attributsatz der zu aktualisierenden Vorrichtung eine oder mehrere Attributinformationsentitäten des Endgeräts und eine oder mehrere Attributinformationsentitäten der zu aktualisierenden Vorrichtung umfasst;
Erhalten (S901), durch den Server, einer Zugriffsrichtlinie der zu aktualisierenden Vorrichtung basierend auf dem Attributsatz der zu aktualisierenden Vorrichtung, wobei die Zugriffsrichtlinie eine oder mehrere Attributinformationsentitäten des Endgeräts und eine oder mehrere Attributinformationsentitäten der zu aktualisierenden Vorrichtung, die in dem Attributsatz der zu aktualisierenden Vorrichtung enthalten sind, umfasst;
Verschlüsseln (S902), durch den Server, eines Zielaktualisierungspakets gemäß der Zugriffsrichtlinie, um einen Geheimtext des Zielaktualisierungspakets zu erzeugen; und Senden (S903), durch den Server, des Geheimtexts des Zielaktualisierungspakets an die zu aktualisierende Vorrichtung, wobei der Geheimtext des Zielaktualisierungspakets durch die zu aktualisierende Vorrichtung verwendet wird, um eine Entschlüsselung basierend auf einem oder mehreren Attributschlüsseln durchzuführen, die der einen oder den mehreren Attributinformationsentitäten in der Zugriffsrichtlinie entsprechen, um das Zielaktualisierungspaket zu erhalten.

2. Verfahren nach Anspruch 1, wobei das Erhalten, durch den Server, der Zugriffsrichtlinie der zu aktualisierenden Vorrichtung basierend auf dem Attributsatz der zu aktualisierenden Vorrichtung umfasst:
Bestimmen, durch den Server, basierend auf dem Attributsatz der zu aktualisierenden Vorrichtung, einer oder mehrerer Aktualisierungsdateien, die durch die zu aktualisierende Vorrichtung aktualisiert werden müssen, wobei das Zielaktualisierungspaket die eine oder die mehreren Aktualisierungsdateien umfasst; und
Bestimmen, durch den Server, von Aktualisierungsbedingungen, die der einen oder den mehreren Aktualisierungsdateien entsprechen, und Erzeugen der Zugriffsrichtlinie basierend auf den Aktualisierungsbedingungen.

3. Verfahren nach einem der Ansprüche 1 bis 2, wobei das Verfahren ferner umfasst:
Erzeugen (S1001), durch den Server, eines öffentlichen Schlüssels und eines Masterschlüssels, wobei der Masterschlüssel ein privater Schlüssel ist, der dem öffentlichen Schlüssel entspricht;
Erzeugen (S1002), durch den Server, des einen oder der mehreren Attributschlüssel, die dem Attributsatz entsprechen, basierend auf dem Masterschlüssel und dem Attributsatz; und
Senden (S1003), durch den Server, des einen oder der mehreren Attributschlüssel an die zu aktualisierende Vorrichtung für eine Vorabspeicherung, wobei der eine oder die mehreren Attributschlüssel durch die zu aktualisierende Vorrichtung verwendet werden, um den Geheimtext des Zielaktualisierungspakets zu entschlüsseln, um das Zielaktualisierungspaket zu erhalten.

4. Verfahren nach einem der Ansprüche 1 bis 3, wobei das Verfahren ferner umfasst:
Erzeugen, durch den Server, eines öffentlichen Schlüssels und eines Masterschlüssels, wobei der Masterschlüssel ein privater Schlüssel ist, der dem öffentlichen Schlüssel entspricht; und
Senden, durch den Server, des Masterschlüssels an die zu aktualisierende Vorrichtung für die Vorabspeicherung, wobei der Masterschlüssel durch die zu aktualisierende Vorrichtung verwendet wird, um den einen oder die mehreren Attributschlüssel zu erzeugen, die dem Attributsatz entsprechen, und der eine oder die mehreren Attributschlüssel durch die zu aktualisierende Vorrichtung verwendet werden, um den Geheimtext des Zielaktualisierungspakets zu entschlüsseln, um das Zielaktualisierungspaket zu erhalten.

5. Vorrichtungsaktualisierungsverfahren, umfassend:
Empfangen, durch eine zu aktualisierende Vorrichtung, eines Geheimtexts, der von einem Zielaktualisierungspaket ist und der durch einen Server gesendet wird, wobei der Geheimtext des Zielaktualisierungspakets durch den Server durch Verschlüsseln des Zielaktualisierungspakets gemäß einer Zugriffsrichtlinie basierend auf einem Attributsatz der zu aktualisierenden Vorrichtung als Reaktion auf eine Aktualisierungsanforderung der zu aktualisierenden Vorrichtung von einem Endgerät erzeugt wird, wobei die Aktualisierungsanforderung einen Attributsatz der zu aktualisierenden Vorrichtung umfasst, wobei der Attributsatz der zu aktualisierenden Vorrichtung eine oder mehrere Attributinformationsentitäten des Endgeräts und eine oder mehrere Attributinformationsentitäten der zu aktualisierenden Vorrichtung umfasst, und die Zugriffsrichtlinie eine oder mehrere Attributinformationsentitäten des Endgeräts und eine oder mehrere Attributinformationsentitäten der zu aktualisierenden Vorrichtung, die in dem Attributsatz der zu aktualisierenden Vorrichtung enthalten sind, umfasst;
Erhalten, durch die zu aktualisierende Vorrichtung, eines oder mehrerer Attributschlüssel, die der einen oder den mehreren Attributinformationsentitäten in der Zugriffsrichtlinie entsprechen; und
Entschlüsseln, durch die zu aktualisierende Vorrichtung, des Geheimtexts des Zielaktualisierungspakets basierend auf dem einen oder den mehreren Attributschlüsseln, um das Zielaktualisierungspaket zu erhalten.

6. Verfahren nach Anspruch 5, wobei das Erhalten, durch die zu aktualisierende Vorrichtung, eines oder mehrerer Attributschlüssel, die dem Attributsatz entsprechen, umfasst:
Empfangen, durch die zu aktualisierende Vorrichtung, des einen oder der mehreren Attributschlüssel, die durch den Server gesendet werden, und Vorabspeichern des einen oder der mehreren Attributschlüssel, wobei der eine oder die mehreren Attributschlüssel ein oder mehrere Attributschlüssel sind, die basierend auf einem Masterschlüssel und der einen oder den mehreren Attributinformationsentitäten erzeugt werden, nachdem der Server einen öffentlichen Schlüssel und den Masterschlüssel erzeugt, und wobei der Masterschlüssel ein privater Schlüssel ist, der dem öffentlichen Schlüssel entspricht.

7. Verfahren nach Anspruch 5, wobei das Erhalten, durch die zu aktualisierende Vorrichtung, eines oder mehrerer Attributschlüssel, die dem Attributsatz entsprechen, umfasst:
Empfangen, durch die zu aktualisierende Vorrichtung, eines Masterschlüssels, der durch den Server gesendet wird, und Vorabspeichern des Masterschlüssels, wobei der Masterschlüssel durch den Server erzeugt wird; und
Erzeugen, durch die zu aktualisierende Vorrichtung, des einen oder der mehreren Attributschlüssel basierend auf dem Masterschlüssel und der einen oder den mehreren Attributinformationsentitäten.

8. Vorrichtungsaktualisierungseinrichtung (10), angewendet auf einen Server, wobei die Einrichtung umfasst:
eine Erhalteneinheit (104), die konfiguriert ist, um eine Aktualisierungsanforderung zu empfangen, die von einer zu aktualisierenden Vorrichtung ist und die durch ein Endgerät gesendet wird, wobei die Aktualisierungsanforderung einen Attributsatz der zu aktualisierenden Vorrichtung umfasst, wobei der Attributsatz der zu aktualisierenden Vorrichtung eine oder mehrere Attributinformationsentitäten des Endgeräts und eine oder mehrere Attributinformationsentitäten der zu aktualisierenden Vorrichtung umfasst;
eine Richtlinienerzeugungseinheit (101), die konfiguriert ist, um eine Zugriffsrichtlinie der zu aktualisierenden Vorrichtung basierend auf dem Attributsatz der zu aktualisierenden Vorrichtung zu erhalten, wobei die Zugriffsrichtlinie eine oder mehrere Attributinformationsentitäten des Endgeräts und eine oder mehrere Attributinformationsentitäten der zu aktualisierenden Vorrichtung, die in dem Attributsatz der zu aktualisierenden Vorrichtung enthalten sind, umfasst;
eine Verschlüsselungseinheit (102), die konfiguriert ist, um ein Zielaktualisierungspaket gemäß der Zugriffsrichtlinie zu verschlüsseln, um einen Geheimtext des Zielaktualisierungspakets zu erzeugen; und
eine erste Sendeeinheit (103), die konfiguriert ist, um den Geheimtext des Zielaktualisierungspakets an die zu aktualisierende Vorrichtung zu senden, wobei der Geheimtext des Zielaktualisierungspakets durch die zu aktualisierende Vorrichtung verwendet wird, um eine Entschlüsselung basierend auf einem oder mehreren Attributschlüsseln durchzuführen, die der einen oder den mehreren Attributinformationsentitäten entsprechen, die in der Zugriffsrichtlinie enthalten sind, um das Zielaktualisierungspaket zu erhalten.

9. Einrichtung (10) nach Anspruch 8, wobei die Richtlinienerzeugungseinheit (101) speziell für Folgendes konfiguriert ist:
Bestimmen, basierend auf dem Attributsatz der zu aktualisierenden Vorrichtung, einer oder mehrerer Aktualisierungsdateien, die durch die zu aktualisierende Vorrichtung aktualisiert werden müssen, wobei das Zielaktualisierungspaket die eine oder die mehreren Aktualisierungsdateien umfasst; und
Bestimmen von Aktualisierungsbedingungen, die der einen oder den mehreren Aktualisierungsdateien entsprechen, und Erzeugen der Zugriffsrichtlinie basierend auf den Aktualisierungsbedingungen.

10. Einrichtung (10) nach einem der Ansprüche 8 bis 9, wobei die Einrichtung (10) ferner umfasst:
eine erste Schlüsselerzeugungseinheit (105), die konfiguriert ist, um einen öffentlichen Schlüssel und einen Masterschlüssel zu erzeugen, wobei der Masterschlüssel ein privater Schlüssel ist, der dem öffentlichen Schlüssel entspricht;
eine zweite Schlüsselerzeugungseinheit (106), die konfiguriert ist, um basierend auf dem Masterschlüssel und dem Attributsatz den einen oder die mehreren Attributschlüssel zu erzeugen, die dem Attributsatz entsprechen; und
eine zweite Sendeeinheit (107), die konfiguriert ist, um den einen oder die mehreren Attributschlüssel an die zu aktualisierende Vorrichtung für die Vorabspeicherung zu senden, wobei der eine oder die mehreren Attributschlüssel durch die zu aktualisierende Vorrichtung verwendet werden, um den Geheimtext des Zielaktualisierungspakets zu entschlüsseln, um das Zielaktualisierungspaket zu erhalten.

11. Einrichtung (10) nach einem der Ansprüche 8 bis 10, wobei die Einrichtung (10) ferner umfasst:
eine dritte Schlüsselerzeugungseinheit (108), die konfiguriert ist, um einen öffentlichen Schlüssel und einen Masterschlüssel zu erzeugen, wobei der Masterschlüssel ein privater Schlüssel ist, der dem öffentlichen Schlüssel entspricht; und
eine dritte Sendeeinheit (109), die konfiguriert ist, um den Masterschlüssel an die zu aktualisierende Vorrichtung für die Vorabspeicherung zu senden, wobei der Masterschlüssel durch die zu aktualisierende Vorrichtung verwendet wird, um den einen oder die mehreren Attributschlüssel zu erzeugen, die dem Attributsatz entsprechen, und der eine oder die mehreren Attributschlüssel durch die zu aktualisierende Vorrichtung verwendet werden, um den Geheimtext des Zielaktualisierungspakets zu entschlüsseln, um das Zielaktualisierungspaket zu erhalten.

12. Zu aktualisierende Einrichtung (20), angewendet auf eine zu aktualisierende Vorrichtung, wobei die Einrichtung umfasst:
eine Empfangseinheit (201), die konfiguriert ist, um einen Geheimtext zu empfangen, der aus einem Zielaktualisierungspaket ist und der durch einen Server gesendet wird, wobei der Geheimtext des Zielaktualisierungspakets durch den Server durch Verschlüsseln des Zielaktualisierungspakets gemäß einer Zugriffsrichtlinie basierend auf einem Attributsatz der zu aktualisierenden Vorrichtung als Reaktion auf eine Aktualisierungsanforderung der zu aktualisierenden Vorrichtung von einem Endgerät erzeugt wird, wobei die Aktualisierungsanforderung einen Attributsatz der zu aktualisierenden Vorrichtung umfasst, wobei der Attributsatz der zu aktualisierenden Vorrichtung eine oder mehrere Attributinformationsentitäten des Endgeräts und eine oder mehrere Attributinformationsentitäten der zu aktualisierenden Vorrichtung umfasst, und die Zugriffsrichtlinie eine oder mehrere Attributinformationsentitäten des Endgeräts und eine oder mehrere Attributinformationsentitäten der zu aktualisierenden Vorrichtung, die in dem Attributsatz der zu aktualisierenden Vorrichtung enthalten sind, umfasst;
eine Erhalteneinheit (202), die konfiguriert ist, um einen oder mehrere Attributschlüssel zu erhalten, die der einen oder den mehreren Attributinformationsentitäten in der Zugriffsrichtlinie entsprechen; und
eine Entschlüsselungseinheit (203), die konfiguriert ist, um den Geheimtext des Zielaktualisierungspakets basierend auf dem einen oder den mehreren Attributschlüsseln zu entschlüsseln, um das Zielaktualisierungspaket zu erhalten.

13. Einrichtung (20) nach Anspruch 12, wobei die Erhalteneinheit (202) speziell für Folgendes konfiguriert ist:
Empfangen des einen oder der mehreren Attributschlüssel, die durch den Server gesendet werden, und Vorabspeichern des einen oder der mehreren Attributschlüssel, wobei der eine oder die mehreren Attributschlüssel ein oder mehrere Attributschlüssel sind, die basierend auf einem Masterschlüssel und der einen oder den mehreren Attributinformationsentitäten erzeugt werden, nachdem der Server einen öffentlichen Schlüssel und den Masterschlüssel erzeugt, und wobei der Masterschlüssel ein privater Schlüssel ist, der dem öffentlichen Schlüssel entspricht.

14. Einrichtung (20) nach Anspruch 12, wobei die Erhalteneinheit (202) speziell für Folgendes konfiguriert ist:
Empfangen eines Masterschlüssels, der durch den Server gesendet wird und
Vorabspeichern des Masterschlüssels, wobei der Masterschlüssel durch den Server erzeugt wird; und
Erzeugen des einen oder der mehreren Attributschlüssel basierend auf dem Masterschlüssel und der einen oder den mehreren Attributinformationsentitäten.

## Revendications

1. Procédé de mise à jour de dispositif, comprenant :
la réception, par un serveur, d'une demande de mise à jour qui provient d'un dispositif à mettre à jour et qui est envoyée par un dispositif terminal, la demande de mise à jour comprenant un ensemble d'attributs du dispositif à mettre à jour, l'ensemble d'attributs du dispositif à mettre à jour comprenant un ou plusieurs éléments d'informations d'attributs du dispositif terminal et un ou plusieurs éléments d'informations d'attributs du dispositif à mettre à jour ;
l'obtention (S901), par le serveur, d'une politique d'accès du dispositif à mettre à jour sur la base de l'ensemble d'attributs du dispositif à mettre à jour, la politique d'accès comprenant un ou plusieurs éléments d'informations d'attributs du dispositif terminal et un ou plusieurs éléments d'informations d'attributs du dispositif à mettre à jour, compris dans l'ensemble d'attributs du dispositif à mettre à jour ;
le chiffrement (S902), par le serveur, d'un progiciel de mise à jour cible selon la politique d'accès, pour générer un texte chiffré du progiciel de mise à jour cible ; et
l'envoi (S903), par le serveur, du texte chiffré du progiciel de mise à jour cible au dispositif à mettre à jour, le texte chiffré du progiciel de mise à jour cible étant utilisé par le dispositif à mettre à jour pour effectuer un déchiffrement sur la base d'une ou de plusieurs clés d'attributs correspondant à la ou aux informations d'attributs dans la politique d'accès afin d'obtenir le progiciel de mise à jour cible.

2. Procédé selon la revendication 1, l'obtention, par le serveur, de la politique d'accès du dispositif à mettre à jour sur la base de l'ensemble d'attributs du dispositif à mettre à jour comprenant :
la détermination, par le serveur sur la base de l'ensemble d'attributs du dispositif à mettre à jour, d'un ou de plusieurs fichiers de mise à jour qui doivent être mis à jour par le dispositif à mettre à jour, le progiciel de mise à jour cible comprenant le ou les fichiers de mise à jour ; et
la détermination, par le serveur, de conditions de mise à jour correspondant au ou aux fichiers de mise à jour, et la génération de la politique d'accès sur la base des conditions de mise à jour.

3. Procédé selon l'une quelconque des revendications 1 à 2, le procédé comprenant en outre :
la génération (S1001), par le serveur, d'une clé publique et d'une clé maîtresse, la clé maîtresse étant une clé privée correspondant à la clé publique ;
la génération (S1002), par le serveur, de la ou des clés d'attributs correspondant à l'ensemble d'attributs sur la base de la clé maîtresse et de l'ensemble d'attributs ; et
l'envoi (S1003), par le serveur, de la ou des clés d'attributs au dispositif à mettre à jour pour le pré-stockage, la ou les clés d'attributs étant utilisées par le dispositif à mettre à jour pour déchiffrer le texte chiffré du progiciel de mise à jour cible afin d'obtenir le progiciel de mise à jour cible.

4. Procédé selon l'une quelconque des revendications 1 à 3, le procédé comprenant en outre :
la génération, par le serveur, d'une clé publique et d'une clé maîtresse, la clé maîtresse étant une clé privée correspondant à la clé publique ; et
l'envoi, par le serveur, de la clé maîtresse au dispositif à mettre à jour pour le pré-stockage, la clé maîtresse étant utilisée par le dispositif à mettre à jour pour générer la ou les clés d'attributs correspondant à l'ensemble d'attributs, et la ou les clés d'attributs étant utilisées par le dispositif à mettre à jour pour déchiffrer le texte chiffré du progiciel de mise à jour cible afin d'obtenir le progiciel de mise à jour cible.

5. Procédé de mise à jour de dispositif, comprenant :
la réception, par un dispositif à mettre à jour, d'un texte chiffré qui provient d'un progiciel de mise à jour cible et qui est envoyé par un serveur, le texte chiffré du progiciel de mise à jour cible étant généré par le serveur en chiffrant le progiciel de mise à jour cible selon une politique d'accès sur la base d'un ensemble d'attributs du dispositif à mettre à jour en réponse à une demande de mise à jour du dispositif à mettre à jour en provenance d'un dispositif terminal, la demande de mise à jour comprenant un ensemble d'attributs du dispositif à mettre à jour, l'ensemble d'attributs du dispositif à mettre à jour comprenant un ou plusieurs éléments d'informations d'attributs du dispositif terminal et un ou plusieurs éléments d'informations d'attributs du dispositif à mettre à jour, et la politique d'accès comprenant un ou plusieurs éléments d'informations d'attributs du dispositif terminal et un ou plusieurs éléments d'informations d'attributs du dispositif à mettre à jour, compris dans l'ensemble d'attributs du dispositif à mettre à jour ;
l'obtention, par le dispositif à mettre à jour, d'une ou de plusieurs clés d'attributs correspondant à la ou aux informations d'attributs dans la politique d'accès ; et
le déchiffrement, par le dispositif à mettre à jour, du texte chiffré du progiciel de mise à jour cible sur la base de la ou des clés d'attributs afin d'obtenir le progiciel de mise à jour cible.

6. Procédé selon la revendication 5, l'obtention, par le dispositif à mettre à jour, d'une ou de plusieurs clés d'attributs correspondant à l'ensemble d'attributs comprenant :
la réception, par le dispositif à mettre à jour, de la ou des clés d'attributs envoyées par le serveur, et le pré-stockage de la ou des clés d'attributs, la ou les clés d'attributs étant une ou plusieurs clés d'attributs générées sur la base d'une clé maîtresse et du ou des éléments d'informations d'attributs après que le serveur a généré une clé publique et la clé maîtresse, et la clé maîtresse étant une clé privée correspondant à la clé publique.

7. Procédé selon la revendication 5, l'obtention, par le dispositif à mettre à jour, d'une ou de plusieurs clés d'attributs correspondant à l'ensemble d'attributs comprenant :
la réception, par le dispositif à mettre à jour, d'une clé maîtresse envoyée par le serveur, et le pré-stockage de la clé maîtresse, la clé maîtresse étant générée par le serveur ; et
la génération, par le dispositif à mettre à jour, de la ou des clés d'attributs sur la base de la clé maîtresse et du ou des éléments d'informations d'attributs.

8. Appareil de mise à jour de dispositif (10), appliqué à un serveur, l'appareil comprenant :
une unité d'obtention (104), configurée pour recevoir une demande de mise à jour qui provient d'un dispositif à mettre à jour et qui est envoyée par un dispositif terminal, la demande de mise à jour comprenant un ensemble d'attributs du dispositif à mettre à jour, l'ensemble d'attributs du dispositif à mettre à jour comprenant un ou plusieurs éléments d'informations d'attributs du dispositif terminal et un ou plusieurs éléments d'informations d'attributs du dispositif à mettre à jour ;
une unité de génération de politique (101), configurée pour obtenir une politique d'accès du dispositif à mettre à jour sur la base de l'ensemble d'attributs du dispositif à mettre à jour, la politique d'accès comprenant un ou plusieurs éléments d'informations d'attributs du dispositif terminal et un ou plusieurs éléments d'informations d'attributs du dispositif à mettre à jour, compris dans l'ensemble d'attributs du dispositif à mettre à jour ;
une unité de chiffrement (102), configurée pour chiffrer un progiciel de mise à jour cible selon la politique d'accès, afin de générer un texte chiffré du progiciel de mise à jour cible ; et
une première unité d'envoi (103), configurée pour envoyer le texte chiffré du progiciel de mise à jour cible au dispositif à mettre à jour, le texte chiffré du progiciel de mise à jour cible étant utilisé par le dispositif à mettre à jour pour effectuer un déchiffrement sur la base d'une ou de plusieurs clés d'attributs correspondant à la ou aux informations d'attributs comprises dans la politique d'accès afin d'obtenir le progiciel de mise à jour cible.

9. Appareil (10) selon la revendication 8, l'unité de génération de politique (101) étant spécifiquement configurée pour :
déterminer, sur la base de l'ensemble d'attributs du dispositif à mettre à jour, un ou plusieurs fichiers de mise à jour qui doivent être mis à jour par le dispositif à mettre à jour, le progiciel de mise à jour cible comprenant le ou les fichiers de mise à jour ; et
déterminer des conditions de mise à jour correspondant au ou aux fichiers de mise à jour, et générer la politique d'accès sur la base des conditions de mise à jour.

10. Appareil (10) selon l'une quelconque des revendications 8 à 9, l'appareil (10) comprenant en outre :
une première unité de génération de clés (105), configurée pour générer une clé publique et une clé maîtresse, la clé maîtresse étant une clé privée correspondant à la clé publique ;
une deuxième unité de génération de clés (106), configurée pour générer, sur la base de la clé maîtresse et de l'ensemble d'attributs, la ou les clés d'attributs correspondant à l'ensemble d'attributs ; et
une deuxième unité d'envoi (107), configurée pour envoyer la ou les clés d'attributs au dispositif à mettre à jour pour le pré-stockage, la ou les clés d'attributs étant utilisées par le dispositif à mettre à jour pour déchiffrer le texte chiffré du progiciel de mise à jour cible afin d'obtenir le progiciel de mise à jour cible.

11. Appareil (10) selon l'une quelconque des revendications 8 à 10, l'appareil (10) comprenant en outre :
une troisième unité de génération de clés (108), configurée pour générer une clé publique et une clé maîtresse, la clé maîtresse étant une clé privée correspondant à la clé publique ; et
une troisième unité d'envoi (109), configurée pour envoyer la clé maîtresse au dispositif à mettre à jour pour le pré-stockage, la clé maîtresse étant utilisée par le dispositif à mettre à jour pour générer la ou les clés d'attributs correspondant à l'ensemble d'attributs, et la ou les clés d'attributs étant utilisées par le dispositif à mettre à jour pour déchiffrer le texte chiffré du progiciel de mise à jour cible afin d'obtenir le progiciel de mise à jour cible.

12. Appareil à mettre à jour (20), appliqué à un dispositif à mettre à jour, l'appareil comprenant :
une unité de réception (201), configurée pour recevoir un texte chiffré qui provient d'un progiciel de mise à jour cible et qui est envoyé par un serveur, le texte chiffré du progiciel de mise à jour cible étant généré par le serveur en chiffrant le progiciel de mise à jour cible selon une politique d'accès sur la base d'un ensemble d'attributs du dispositif à mettre à jour en réponse à une demande de mise à jour du dispositif à mettre à jour en provenance d'un dispositif terminal, la demande de mise à jour comprenant un ensemble d'attributs du dispositif à mettre à jour, l'ensemble d'attributs du dispositif à mettre à jour comprenant un ou plusieurs éléments d'informations d'attributs du dispositif terminal et un ou plusieurs éléments d'informations d'attributs du dispositif à mettre à jour, et la politique d'accès comprenant un ou plusieurs éléments d'informations d'attributs du dispositif terminal et un ou plusieurs éléments d'informations d'attributs du dispositif à mettre à jour, compris dans l'ensemble d'attributs du dispositif à mettre à jour ;
une unité d'obtention (202), configurée pour obtenir une ou plusieurs clés d'attributs correspondant à la ou aux informations d'attributs dans la politique d'accès ; et
une unité de déchiffrement (203), configurée pour déchiffrer le texte chiffré du progiciel de mise à jour cible sur la base de la ou des clés d'attributs afin d'obtenir le progiciel de mise à jour cible.

13. Appareil (20) selon la revendication 12, le module d'obtention (202) étant spécifiquement configuré pour :
recevoir la ou les clés d'attributs envoyées par le serveur, et pré-stocker la ou les clés d'attributs, la ou les clés d'attributs étant une ou plusieurs clés d'attributs générées sur la base d'une clé maîtresse et du ou des éléments d'informations d'attributs après que le serveur a généré une clé publique et la clé maîtresse, et la clé maîtresse étant une clé privée correspondant à la clé publique.

14. Appareil (20) selon la revendication 12, le module d'obtention (202) étant spécifiquement configuré pour :
recevoir une clé maîtresse envoyée par le serveur, et pré-stocker la clé maîtresse, la clé maîtresse étant générée par le serveur ; et
générer la ou les clés d'attributs sur la base de la clé maîtresse et du ou des éléments d'informations d'attributs.
